# EUROPÄISCHE PATENTSCHRIFT

(11) **EP 3 984 837 B1**
(45) Veröffentlichungstag und Bekanntmachung des Hinweises auf die Patenterteilung: **26.02.2025**
(21) Anmeldenummer: 21201638.0
(22) Anmeldetag: 08.10.2021
(51) Int. Cl.: B60R 25/20, B60R 25/24

(54) **UWB-BETÄTIGUNGSSYSTEM FÜR EIN BEWEGLICHES TEIL EINES FAHRZEUGES**
UWB ACTUATING SYSTEM FOR A MOVABLE PART OF A VEHICLE
SYSTÈME D'ACTIONNEMENT UWB POUR UNE PARTIE MOBILE D'UN VÉHICULE

(30) Priorität: 09.10.2020 DE 102020126547
(43) Veröffentlichungstag der Anmeldung: 20.04.2022
(73) Patentinhaber: Huf Hülsbeck & Fürst GmbH & Co. KG, 42551 Velbert (DE)
(72) Erfinder: Schindler, Mirko, 42549 Velbert (DE); Gornik, Andreas, 58285 Gevelsberg (DE); Peschl, Andreas, 42555 Velbert (DE)
(74) Vertreter: Bals & Vogel Patentanwälte PartGmbB

(56) Entgegenhaltungen:
- KR-B1- 101 788 784
- US-A1- 2015 161 836
- US-A1- 2015 258 962
- US-A1- 2017 167 180
- US-A1- 2018 107 278
- US-B1- 9 593 522

## Beschreibung

Die vorliegende Erfindung betrifft ein Betätigungssystem für ein bewegliches Teil, insbesondere eine Tür oder eine Klappe, eines Fahrzeuges, vorzugsweise in Form eines Zugangssystems zu einem Fahrzeuginnenraum, einem Funktionsraum oder einem Funktionselement des Fahrzeuges. Des Weiteren ist die vorliegende Erfindung auf ein entsprechendes Fahrzeug mit mindestens einem solchen Betätigungssystem gerichtet. Ferner betrifft die Erfindung ein Verfahren zum Betätigen eines beweglichen Teils, insbesondere einer Tür oder einer Klappe, eines Fahrzeuges mithilfe eines solchen Betätigungssystems.

Betätigungssysteme für bewegliche Teile von Fahrzeugen, wie z. B. Türen oder eine Klappen sind grundsätzlich bekannt, wie z.B. aus der US 2015/161836 A. Moderne Betätigungssysteme können außerdem dazu ausgeführt sein, bestimmte Bewegungen des Benutzers oder eines Körperteils (eines Fußes oder einer Hand) des Benutzers zu erfassen und entsprechende Vorgänge, wie z. B. berührungsloses Öffnen der Tür oder Klappe auszulösen. Bei modernen Betätigungssystemen werden hierzu komplexe Sensoreinheiten sowie Auswert- und Steuerelektroniken benötigt. Bei manchen Fahrzeugmodellen werden unterschiedlichen Versionen und/oder Ausstattungen angeboten, die zum Teil solche Betätigungssysteme unterstützen können. Dadurch steigt bei manchen Fahrzeugmodellen der Kostenfaktor. Andere Fahrzeugmodelle dagegen können die vorteilhafte Funktionalität nicht bieten.

Es ist daher die Aufgabe der vorliegenden Anmeldung, ein verbessertes Betätigungssystem für ein bewegliches Teil, insbesondere eine Tür oder eine Klappe, eines Fahrzeuges bereitzustellen, welches einfach und kostengünstig ausgeführt ist, welches eine verbesserte Funktionalität aufweist, und welches ein verbesserte, kundenfreundliche, bequeme und intuitive Betätigung des beweglichen Teils ermöglicht. Insbesondere ist es die Aufgabe der vorliegenden Anmeldung, ein verbessertes Betätigungssystem für ein bewegliches Teil, insbesondere eine Tür oder eine Klappe, eines Fahrzeuges bereitzustellen, welches eine flexible, erneuerungsfähige Versionierung ermöglicht, und welches die verbesserte Funktionalität des Betätigungssystems zumindest zum Teil von der Ausstattung der fahrzeugseitigen Sensoreinheiten sowie Auswert- und Steuerelektroniken entkoppelt. Zudem ist es die Aufgabe der Erfindung, ein entsprechendes Fahrzeug und ein verbessertes Verfahren zum Betätigen eines beweglichen Teils, insbesondere einer Tür oder einer Klappe, eines Fahrzeuges bereitzustellen.

Die voranstehende Aufgabe wird gelöst durch ein Betätigungssystem für ein bewegliches Teil, insbesondere eine Tür oder eine Klappe, eines Fahrzeuges, vorzugsweise in Form eines Zugangssystems zu einem Fahrzeuginnenraum, einem Funktionsraum oder einem Funktionselement des Fahrzeuges mit den Merkmalen des unabhängigen Vorrichtungsanspruchs; durch ein entsprechendes Fahrzeug mit mindestens einem solchen Betätigungssystem mit den Merkmalen des nebengeordneten unabhängigen Vorrichtungsanspruchs sowie durch ein Verfahren zum Betätigen eines beweglichen Teils, insbesondere einer Tür oder einer Klappe, eines Fahrzeuges mithilfe eines solchen Betätigungssystems mit den Merkmalen des unabhängigen Verfahrensanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Betätigungssystem beschrieben sind, selbstverständlich auch im Zusammenhang mit dem erfindungsgemäßen Fahrzeug sowie dem erfindungsgemäßen Verfahren, und jeweils umgekehrt, sodass bezüglich der Offenbarung zu den einzelnen Erfindungsaspekten stets wechselseitig Bezug genommen wird bzw. werden kann.

Die Aufgabe wird insbesondere gelöst durch ein Betätigungssystem für ein bewegliches Teil, insbesondere eine Tür oder eine Klappe (bspw. Tankklappe, Ladeklappe, Heckklappe), eines Fahrzeuges, vorzugsweise in Form eines Zugangssystems zu einem Fahrzeuginnenraum (bspw. Fahrgastraum), einem Funktionsraum (bspw. Kofferraum) oder einem Funktionselement (bspw. Öffnung zum Tanken oder Ladestecker) des Fahrzeuges, aufweisend mindestens eine UWB-Sensoreinheit, wobei die UWB-Sensoreinheit zum Durchführen einer Detektion (d. h. einer Erfassung mit nur einem Gerät) eines Bewegungsmusters eines Benutzers, insbesondere eines Körperteils, vorzugsweise eines Fußes oder einer Hand, des Benutzers, ausgeführt ist, und wobei die UWB-Sensoreinheit zum Durchführen einer Kommunikation (d. h. eines Datenaustausches zwischen zwei Geräten) mit einem benutzerseitigen Mobilgerät ausgeführt ist, um mindestens ein Ergebnis der Detektion und/oder Kommunikation an das fahrzeugseitige Steuergerät zu übermitteln und in Abhängigkeit von dem Ergebnis das bewegliche Teil zu betätigen.

UWB steht für die Ultra-Breitband-Technologie. Die UWB-Sensoreinheit kann einen UWB-Sendeempfänger, bspw. in Form eines UWB-Front-End-Moduls, aufweisen. Die UWB-Sensoreinheit kann eine Verarbeitungsvorrichtung, bspw. in Form einer elektronischen Verarbeitungsanordnung, aufweisen, die zur Verarbeitung bspw. einen Mikrocontroller nutzen kann. Die Verarbeitungsvorrichtung kann den UWB-Sendeempfänger ansteuern und die elektrischen Signale, die von dem UWB-Sendeempfänger gesendet und/oder empfangen werden, verarbeiten, um die Kommunikation und/oder die Detektion auszuwerten und ein Ergebnis bzw. eine Information anhand der Kommunikation und/oder der Detektion zu erhalten. Auch kann die Verarbeitungsvorrichtung anhand, insbesondere in Abhängigkeit von der Auswertung, der Kommunikation und/oder der Detektion einen Funktionscode zum Betätigen (umfassend Betätigungsfunktionen, wie: Öffnen, Schließen, Entriegeln, Verriegeln) des beweglichen Teils generieren, um eine entsprechende Betätigungsfunktion zu triggern.

Die UWB-Sensoreinheit kann eine Schnittstelle, bspw. in Form einer elektronischen Schnittstelle aufweisen, die die UWB-Sensoreinheit elektrisch, steuerungstechnisch und datentechnisch mit dem Steuergerät des Fahrzeuges oder direkt mit einem Schließsystem des beweglichen Teils verbinden kann, um z. B. über die Schnittstelle die Ergebnisse der Kommunikation und/oder der Detektion an das Steuergerät zu übermitteln und/oder über die Schnittstelle mindestens eine entsprechende Betätigungsfunktion zum Betätigen des beweglichen Teils in Abhängigkeit von der Kommunikation und/oder der Detektion zu triggern.

Die elektrischen Signale, die von dem UWB-Sendeempfänger der UWB-Sensoreinheit gesendet und/oder empfangen werden, können für die Kommunikation und/oder die Detektion spezifisch sein. Darunter ist insbesondere zu verstehen, dass anhand der elektrischen Signale ein Ergebnis der Detektion und/oder Kommunikation durch die Verarbeitungsvorrichtung ermittelt werden kann.

Ein Ergebnis einer Detektion kann wenigstens eine Information darüber umfassen, ob sich ein Benutzer bzw. eine Person und/oder ein Objekt in der Nähe der UWB-Sensoreinheit befindet, sich der UWB-Sensoreinheit nähert, sich bewegt und/oder sich auf eine besondere Weise bewegt.

Ein Ergebnis einer Kommunikation zwischen der UWB-Sensoreinheit und dem benutzerseitigen Mobilgerät kann wenigstens eine Information über den Benutzer, z. B. eine Authentifizierungsinformation, umfassen, um sicherzustellen, dass nur ein berechtigter Benutzer das bewegliche Teil betätigen kann.

Über die Schnittstelle kann die UWB-Sensoreinheit die Information über den Benutzer, z. B. eine Authentifizierungsinformation, die Ergebnisse der Kommunikation und/oder der Detektion sowie den, insbesondere durch die Verarbeitungsvorrichtung berechneten, Funktionscode für einen entsprechenden Funktionscode zum Betätigen des beweglichen Teils an das fahrzeugseitige Steuergerät oder direkt an ein Schließsystem des beweglichen Teils übertragen.

Ein Ergebnis einer Kommunikation zwischen der UWB-Sensoreinheit und dem benutzerseitigen Mobilgerät kann zudem Navigationsdaten, Nachrichtendaten, Musikdaten und dergleichen umfassen. Sicherheitshalber muss sich hierfür der Benutzer vorher identifizieren, damit keine fremden Daten zwischen der UWB-Sensoreinheit und dem benutzerseitigen Mobilgerät ausgetauscht werden. Diese Daten können ebenfalls von der UWB-Sensoreinheit über die Schnittstelle an das fahrzeugseitige Steuergerät übertragen werden.

Ein Signal für die Kommunikation kann z. B. eine definierte Folge kurzer UWB-Impulse sein. Die definierte Folge kurzer UWB-Impulse, die bspw. mit Zeitstempeln versehen werden können, kann mithilfe der Pulsphasenmodulation im Rahmen einer digitalen Funkübertragung erzeugt werden. Dabei wird ein UWB-Puls relativ zu einem konstanten Referenztakt in der zeitlichen Lage, nämlich der Phase, verschoben. Die Phasenverschiebung zwischen den UWB-Impulsen symbolisiert dabei die Information, wie z. B. eine Authentifizierungsinformation. Die Periodendauer und die Amplitude bleiben dabei gleich.

Ein UWB-Impuls kann bspw. als ein Teil einer Sinusschwingung von einer begrenzten Dauer von wenigen Nanosekunden oder sogar Pikosekunden abgebildet werden, der einer breiten Spektrallinie von mindestens 5 GHz, insbesondere von 7,5 GHz, bis über 8,8 GHz entspricht.

Aufgrund der extrem kurzen UWB-Impulse kann eine hohe Übertragungsrate von 480 bis 1320 Mbit/s bei der Kommunikation erzielt werden, bspw. mithilfe einer digitalen Funkübertragung.

Ebenfalls aufgrund der extrem kurzen UWB-Impulse kann eine hohe Auflösung von wenigen Millimetern bis sogar Mikrometern bei der Detektion erzielt werden, bspw. mithilfe einer Laufzeitmessung der UWB-Impulse, die bspw. mit Zeitstempeln versehen werden können.

Die Abmessung der UWB-Antenne der UWB-Sensoreinheit bestimmt die Mittelfrequenz und die Bandbreite des UWB-Impulses. Die gesamte Sendeleistung der UWB-Antenne von wenigen Milliwatt (bspw. von ung. 0,5 mW) wird auf einen so großen Frequenzbereich verteilt, dass für den Funkbetrieb schmalbandiger Übertragungsverfahren nahezu keine Störungen hervorgerufen werden.

Der Erfindungsgedanke liegt dabei darin, dass die UWB-Sensoreinheit die UWB-Technologie nutzt, um eine Kommunikation, d. h. Datenaustausch zwischen zwei Geräten, und/oder eine Detektion, d. h Erfassung von Bewegungsmustern mit nur einem Gerät, nämlich der UWB-Sensoreinheit, durchzuführen. Dabei kann die UWB-Antenne für die Kommunikation und für die Detektion eine gemeinsame UWB-Antennen-Einheit oder zwei separate UWB- Antennen-Einheiten aufweisen, sodass die Kommunikation und die Detektion simultan oder sequenziell durchgeführt werden kann.

Der Erfindungsgedanke liegt zudem darin, dass mithilfe der UWB-Sensoreinheit eine hoch aufgelöste Detektion mit der Auflösung von wenigen Millimetern bis sogar Mikrometern erzielt werden kann, bspw. mithilfe einer Laufzeitmessung der UWB-Impulse. Somit kann ein Betätigungssystem bereitgestellt werden, das zuverlässig im Betrieb ist und das die Sicherheit beim Betätigen des beweglichen Teils erheblich erhöht. Das Betätigungssystem kann eine oder mehrere UWB-Sensoreinheiten umfassen, um die 2D- oder 3D-Auflösung bereitzustellen. Mithilfe von mehreren UWB-Sensoreinheiten können außerdem komplizierte Bewegungen schnell und hochaufgelöst detektiert sowie analysiert werden.

Ein Vorteil der Erfindung kann ferner darin liegen, dass die Detektion und die Kommunikation mithilfe einer UWB-Sensoreinheit eine begrenzte Reichweite, bspw. von 10 - 50 m, aufweist. Fehlerhafte Betätigungen oder Manipulationen des beweglichen Teils können dadurch effektiv vermieden werden. Insbesondere sog. Mann-in-der-Mitte-Attacken können mithilfe der Erfindung nahezu unterbunden werden. Bei der Kommunikation wird die Information, wie die Authentifizierungsinformation, nur über diese begrenzte Reichweite übertragen. Stellt die UWB-Sensoreinheit fest, dass sich kein Benutzer innerhalb dieser begrenzten Reichweite identifizieren kann, wird der Zugang zum Fahrzeug sicher verweigert. Unberechtigte Verlängerung der Kommunikation können dabei nahezu ausgeschlossen werden.

Ein entsprechendes benutzerseitiges Mobilgerät kann ebenfalls ein Teil des Betätigungssystems im Sinne der Erfindung darstellen. Bei dem Mobilgerät kann es sich um ein elektronisches Gerät handeln, welches von dem Benutzer bei sich getragen kann. Idealerweise handelt es sich hierbei um einen ID-Geber, der aktiv (durch Knopfdruck) oder passiv (ohne Knopfdruck) ausgestaltet sein kann, um somit ein sogenanntes Aktiv-Keyless-Entry-System oder ein Passiv-Keyless-Entry-System mit der Sicherheitsvorrichtung des Fahrzeuges zu bilden. Auch kann das Mobilgerät als ein Mobilfunktelefon, insbesondere Smartphone, oder Tablet oder Smartwatch ausgestaltet sein, um den gewünschten Datenaustausch mithilfe der Kommunikation mit der UWB-Sensoreinheit erreichen zu können. Neben der Kommunikation zum Identifizierungsvorgang mit dem entsprechenden Identifizierungscode können auch weitere (auszulösende) Funktionen durch das Mobilgerät am Fahrzeug ausgelöst oder angesteuert werden. So kann z.B. die Beleuchtung innen oder außen beim Fahrzeug oder ein Warnsignal oder dergleichen durch das Mobilgerät angesteuert werden (z.B. auch das Ein- und Ausschalten der Alarmanlage oder Schließen der Fenster, Einschalten der Heizung etc.). Auch ist eine Datenübertragung mithilfe der Kommunikation, von bspw. Navigations-, Musikdaten-, Video-, und/oder Nachrichtendaten etc. zwischen Fahrzeug und dem Mobilgerät realisierbar.

Vorteilhafterweise kann das Betätigungssystem dazu ausgeführt sein, einen 2D-Bewegungsmusters oder einen 3D-Bewegungsmusters zu detektieren.

Zudem kann es von Vorteil sein, dass das Betätigungssystem dazu ausgeführt sein kann, eine erste Bewegungssequenz, insbesondere in eine erste Richtung, zu erfassen, die dazu dient, eine Öffnung des beweglichen Teils zu bewirken. Außerdem kann es vorteilhaft sein, dass das Betätigungssystem dazu ausgeführt sein kann, eine zweite Bewegungssequenz, insbesondere in eine zweite Richtung, die vorzugsweise der ersten Richtung entgegengesetzt ist, zu erfassen, die dazu dient, eine Schließung des beweglichen Teils zu bewirken. Darüber hinaus kann es von Vorteil sein, dass das Betätigungssystem dazu ausgeführt sein kann, eine dritte Bewegungssequenz, insbesondere in Form einer, vorzugsweise einfachen oder zweifachen, Tippbewegung oder einer Drehbewegung in eine erste Drehrichtung, zu erfassen, die dazu dient, eine Entriegelung des beweglichen Teils zu bewirken. Noch weiter kann es vorteilhaft sein, dass das Betätigungssystem dazu ausgeführt sein kann, eine vierte Bewegungssequenz, insbesondere in Form einer, vorzugsweise einfachen oder zweifachen, Tippbewegung oder einer Drehbewegung in eine zweite Drehrichtung, die vorzugsweise der ersten Drehrichtung entgegengesetzt ist, zu erfassen, die dazu dient, eine Verriegelung des beweglichen Teils zu bewirken.

Ferner kann die Erfindung bei einem Betätigungssystem vorsehen, dass die UWB-Sensoreinheit als eine, insbesondere kombinierte, einzeln handhabbare und/oder zusammenhängende, Moduleinheit, vorzugsweise Multifunktionseinheit, bevorzugt in Form einer Hardwareeinheit, zum Bereitstellen von unterschiedlichen Betätigungsfunktionen des beweglichen Teils ausgeführt ist. Somit kann die UWB-Sensoreinheit als ein einzelner Knoten oder mit anderen Worten als ein Satellit bereitgestellt werden, der als eine einzige zusammenhängende Hardwareeinheit mit allen nötigen Sensorfunktionen (Kommunikation und Detektion), Verarbeitungs- und Ansteuerungskomponenten sowie einer Schnittstelle zum fahrzeugseitigen Steuergerät bereitgestellt wird, um mithilfe nur einer UWB-Sensoreinheit unterschiedliche Funktionen (Bewegungsmustererfassung und Authentifizierung) bereitzustellen. Dabei kann nur eine UWB-Antenne (die wiederum mehrere UWB-Antenneneinheiten umfassen kann) alle nötigen Sensorfunktionen für die unterschiedlichen Funktionen bereitstellen. Vorteilhafterweise kann somit ein einfach und kostengünstig aufgebautes, leicht montierbares und einfach (elektrisch und steuerungstechnisch sowie datentechnisch) anschließbares Betätigungssystem bereitgestellt werden. Vorteilhafterweise kann ein solches Betätigungssystem bzw. die UWB-Sensoreinheit eines solchen Betätigungssystems mit der eigenen Verarbeitungsvorrichtung in einem Gehäuseelement aufgenommen werden, um die Handhabung des Betätigungssystems als eine einzeln handhabbare Moduleinheit zu erleichtern. Die UWB-Sensoreinheit eines solchen Betätigungssystems kann mithilfe der Verarbeitungsvorrichtung ein komplettes Steuergerät zum Betätigen des beweglichen Teils liefern. Die Verarbeitungsvorrichtung kann dabei alle nötigen Steuerbefehle zum Betätigen des beweglichen Teils generieren. Bei einem Betätigungssystem für eine Heckklappe kann die UWB-Sensoreinheit als ein Kicksensor-Modul bereitgestellt werden.

Weiterhin kann die Erfindung bei einem Betätigungssystem vorsehen, dass eine oder mehrere UWB-Sensoreinheiten für ein bewegliches Teil vorgesehen ist/sind. Mehrere UWB-Sensoreinheiten können bei einer Detektion zwecks Bewegungsmustererkennung helfen, eine hohe 2D- oder 3D-Auflösung bereitzustellen. Mithilfe von mehreren UWB-Sensoreinheiten können außerdem komplizierte Bewegungen sehr schnell und hochaufgelöst erfasst werden.

Des Weiteren kann die Erfindung bei einem Betätigungssystem vorsehen, dass eine oder mehrere UWB-Sensoreinheiten, insbesondere innenseitig, an einem Heckbereich, an einem Stoßfänger, an einem Diffusor, an einem Strukturbauteil, an einer A-, B-, und/oder C-Säule, einem Seitenbereich und/oder an dem beweglichen Teil angeordnet ist/sind. Auf diese Weise können unterschiedliche Funktionen für verschiedene bewegliche Teile des Fahrzeuges bereitgestellt werden.

Im Rahmen der Erfindung ist es denkbar, dass der Benutzer über das benutzerseitige Mobilgerät und/oder das fahrzeugseitige Steuergerät über die Betätigung informiert wird. Vorteilhafterweise kann das Mobilgerät durch haptische Signale, bspw. Vibrieren, akustische Signale oder optische Anzeigen den Benutzer über die Betätigung informieren. Das fahrzeugseitige Steuergerät kann wiederum bestimmte optische Anzeigen am Fahrzeug, wie z. B. Leuchten, ansteuern, um den Benutzer über die Betätigung zu informieren. Unterschiedliche Betätigungsfunktionen können bspw. mithilfe von unterschiedlichen Farben signalisiert werden, wie z. B. grün für Öffnen, rot für Schließen, blau zum Entriegeln und/oder gelb zum Verriegeln.

Zudem kann die Erfindung bei einem Betätigungssystem vorsehen, dass die UWB-Sensoreinheit mindestens eine Leiterplatte aufweist, wobei insbesondere auf der Leiterplatte mindestens eines von den folgenden Elementen angeordnet ist:
- eine UWB-Antenne zum Durchführen der Kommunikation und/oder der Detektion, wobei in Abhängigkeit von der Kommunikation und/oder der Detektion unterschiedliche Betätigungsfunktionen (wie z. B.: Öffnen, Schließen, Entriegeln, Verriegeln) zum Betätigen des beweglichen Teils aktivierbar sind,
- ein, insbesondere elektronischer, UWB-Sendeempfänger zum Aussenden und/oder Empfangen von elektrischen Signalen von der UWB-Antenne, die für die Kommunikation und/oder die Detektion spezifisch sind,
- eine, insbesondere elektronische, Verarbeitungsvorrichtung zur Ansteuerung des UWB-Sendeempfängers, um Kommunikation und/oder die Detektion durch die UWB-Antenne durchzuführen, und/oder
- eine, insbesondere elektronische, Schnittstelle zum Übermitteln eines Ergebnisses der Kommunikation und/oder der Detektion an das fahrzeugseitige Steuergerät oder direkt an das bewegliche Teil, um Betätigungsfunktionen zum Betätigen des beweglichen Teils in Abhängigkeit von der Kommunikation und/oder der Detektion einzuleiten. Auf diese Weise kann die UWB-Sensoreinheit als eine, insbesondere kombinierte, einzeln handhabbare und/oder zusammenhängende, Moduleinheit, vorzugsweise Multifunktionseinheit, bevorzugt in Form einer Hardwareeinheit, zum Bereitstellen von unterschiedlichen Betätigungsfunktionen bei einem Fahrzeug zur Verfügung gestellt werden.

Außerdem kann die Erfindung bei einem Betätigungssystem vorsehen, dass die UWB-Antenne in einem Frequenzbereich mit einer Bandbreite von mindestens 500 MHz oder von mindestens 20 % des arithmetischen Mittelwertes von unterer und oberer Grenzfrequenz des genutzten Frequenzbandes betreibbar ist, wobei vorzugsweise der Frequenzbereich zwischen 30 MHz bis 10,6 GHz, bevorzugt zwischen 3,0 bis 10,6 GHz liegen kann. Auf diese Weise kann eine Kommunikation und/oder Detektion mithilfe der UWB-Technologie bereitgestellt werden.

Darüber hinaus kann die Erfindung bei einem Betätigungssystem vorsehen, dass die UWB-Antenne eine, insbesondere nur eine, vorzugsweise eine gemeinsame für die Kommunikation und/oder die Detektion, UWB-Antennen-Einheit aufweist, die dazu ausgeführt ist, die Kommunikation und/oder die Detektion in Abhängigkeit von einer Ansteuerung durch die Verarbeitungsvorrichtung durchzuführen. Mithilfe nur einer UWB-Antennen-Einheit kann die Kommunikation und die Detektion sequenziell bzw. alternierend durchgeführt werden. Nur eine UWB-Antennen-Einheit kann wiederum eine einfache und kompakte Ausführung aufweisen.

Ferner kann die Erfindung bei einem Betätigungssystem vorsehen, dass die UWB-Sensoreinheit, insbesondere die UWB-Antenne, eine erste UWB-Antennen-Einheit und eine zweite UWB-Antennen-Einheit aufweist, wobei die erste UWB-Antennen-Einheit dazu ausgeführt ist, die Detektion durchzuführen, und wobei die zweite UWB-Antennen-Einheit dazu ausgeführt ist, die Kommunikation durchzuführen. Mithilfe von unterschiedlichen UWB-Antennen-Einheiten können die Kommunikation und die Detektion wahlweise simultan oder sequenziell durchgeführt werden. Mithilfe von unterschiedlichen UWB-Antennen-Einheiten für die Kommunikation und die Detektion können die UWB-Antennen-Einheiten speziell für die Durchführung der Kommunikation oder Detektion ausgelegt werden. Auf diese Weise können die Kommunikation und Detektion mit erhöhter Genauigkeit durchgeführt werden.

Weiterhin kann die Erfindung bei einem Betätigungssystem vorsehen, dass die UWB-Antenne mithilfe eines fotolithografischen Verfahrens auf der Leiterplatte hergestellt ist. Auf diese Weise kann die UWB-Antenne in einem gemeinsamen Herstellungsverfahren mit der Leiterplatte hergestellt werden, was die Herstellung der UWB-Sensoreinheit vereinfachen kann. Auch kann dadurch eine einfach aufgebaute und kompakte UWB-Sensoreinheit bereitgestellt werden.

Des Weiteren kann die Erfindung bei einem Betätigungssystem vorsehen, dass die Verarbeitungsvorrichtung und/oder der UWB-Sendeempfänger einen Mikrocontroller aufweisen/aufweist. Auf diese Weise können elektronische Komponenten zum Betreiben und/oder Ansteuern der UWB-Antenne mit einem Speicher bereitgestellt werden, die programmierbar sind. Somit kann die UWB-Sensoreinheit nach Wunsch des Benutzers programmiert werden, um bestimmte Bewegungsmuster als Aktivierungshandlung für das bewegliche Teil zu detektieren. Außerdem kann dadurch die UWB-Sensoreinheit bzw. die Reichweite, die Erfassungsbereiche usw. der UWB-Sensoreinheit an die Begebenheiten und Witterungsverhältnisse am Einsatzort angepasst werden kann.

Zudem kann die Erfindung bei einem Betätigungssystem vorsehen, dass die UWB-Sensoreinheit, insbesondere der UWB-Sendeempfänger, mindestens ein erstes UWB-Front-End-Modul für eine erste UWB-Antennen-Einheit und ein zweites UWB-Front-End-Modul für eine zweite UWB-Antennen-Einheit aufweist. Auf diese Weise können die erste UWB-Antennen-Einheit und die zweite UWB-Antennen-Einheit simultan betrieben werden, um noch Flexibilität und Kundenkomfort beim Bereitstellen von Betätigungsfunktionen durch die UWB-Sensoreinheit zu ermöglichen.

Außerdem kann die Erfindung bei einem Betätigungssystem vorsehen, dass die UWB-Sensoreinheit, insbesondere der UWB-Sendeempfänger, als ein gemeinsames UWB-Front-End-Modul, für eine erste UWB-Antennen-Einheit und eine zweite UWB-Antennen-Einheit ausgeführt ist. Auf diese Weise können die erste UWB-Antennen-Einheit und die zweite UWB-Antennen-Einheit alternierend betrieben werden. Somit können die Kommunikation und Detektion getrennt voneinander durchgeführt werden, um bspw. Überlagerungen zu vermeiden.

Vorteilhafterweise kann die Erfindung bei einem Betätigungssystem vorsehen, dass die UWB-Sensoreinheit, insbesondere der UWB-Sendeempfänger, eine Schalteinheit aufweist, um eine erste UWB-Antennen-Einheit und eine zweite UWB-Antennen-Einheit zum Durchführen der Kommunikation oder zum Durchführen der Detektion anzusteuern, Somit kann auf eine einfache Art und Weise zwischen der Kommunikation und Detektion umgeschaltet werden.

Weiterhin ist es denkbar, dass die Schalteinheit als ein elektronischer Schalter, vorzugsweise ein HF-Schalter, ausgeführt sein kann. Auf diese Weise kann im Betrieb der UWB-Sensoreinheit hochfrequent zwischen der Kommunikation und Detektion umgeschaltet werden, um schnelle, zuverlässige und komfortable Zurverfügungstellung von Betätigungsfunktionen zu ermöglichen.

Ferner kann die Erfindung bei einem Betätigungssystem vorsehen, dass die UWB-Sensoreinheit, insbesondere der UWB-Sendeempfänger, derart ausgeführt ist, dass die Mittelfrequenz und/oder die Bandbreite der UWB-Antenne beim Durchführen der Detektion variabel einstellbar sind/ist. Auf diese Weise kann erreicht werden, dass die Detektion durch die UWB-Antenne an unterschiedliche Umwelteinflüsse, vorzugsweise Feuchtigkeitsverhältnisse, flexibel angepasst werden kann.

Weiterhin kann die Erfindung bei einem Betätigungssystem vorsehen, dass die UWB-Sensoreinheit, insbesondere der UWB-Sendeempfänger, derart ausgeführt ist, dass Messungen durch die UWB-Antenne beim Durchführen der Detektion mithilfe von Messungen durch die UWB-Antenne, insbesondere von Laufzeiten der UWB-Pulse, beim Durchführen der Kommunikation kalibrierbar sind. Dabei können Laufzeiten der Signale zwischen der UWB-Sensoreinheit und einem Mobilgerät gemessen werden, welches in einem bekannten Abstand zur UWB-Sensoreinheit positioniert ist. Diese Laufzeiten können dazu genutzt werden, um die Genauigkeit der Detektion durch die UWB-Antenne, bspw. bei einer Abstandsmessung, zu verfeinern und die UWB-Antenne somit zum Durchführen der Detektion zu kalibrieren. Vorteilhafterweise kann dadurch die Genauigkeit der Detektion durch die UWB-Antenne erheblich erhöht werden. Das Kalibrieren der UWB-Antenne zum Durchführen der Detektion kann dabei mithilfe eines Benutzers erfolgen. Vorteilhafterweise ist es aber auch denkbar, dass das Kalibrieren der UWB-Antenne zum Durchführen der Detektion unabhängig und unbemerkt von einem Benutzer durchgeführt werden kann, bspw. in typischen wiederkehrenden Situationen aufgrund von Benutzergewohnheiten, wenn der Abstand des benutzerseitigen Mobilgeräts zur UWB-Sensoreinheit bekannt ist.

Des Weiteren kann die Erfindung bei einem Betätigungssystem vorsehen, dass die UWB-Sensoreinheit, insbesondere der UWB-Sendeempfänger, derart ausgeführt ist, dass ein Einfallswinkel der UWB-Antenne variabel einstellbar ist. Somit können Messbereiche zum Durchführen der Detektion auf eine vorteilhafte Weise eingestellt und/oder ausgerichtet werden. Folglich kann die Bewegungsmustererkennung mithilfe der Detektion sehr genau erfolgen. Auch komplizierte Bewegungsmuster können dadurch zuverlässig erkannt werden.

Ein Betätigungssystem im Rahmen der Erfindung kann vorsehen, dass die UWB-Sensoreinheit, insbesondere der UWB-Sendeempfänger, dazu ausgeführt ist, die Detektion durchzuführen, um:
- eine Präsenz eines Benutzers bzw. einer Person und/oder eines Objekts,
- einen Abstand zu einem Benutzer und/oder einem Objekt,
- eine Position eines Benutzers und/oder eines Objekts, und/oder
- eine Annäherung eines Benutzers und/oder eines Objekts,
- einen bestimmten Bewegungsablauf durch eine Hand oder einen Fuß des Benutzers.

Auf diese Weise kann die UWB-Sensoreinheit auf eine vielfältige Art und Weise eingesetzt werden, um unterschiedliche bewegliche Teile zu betätigen und/oder verschiedene Fahrzeugassistenzsysteme zu unterstützen.

Ein Betätigungssystem im Rahmen der Erfindung kann ferner vorsehen, dass die UWB-Sensoreinheit, insbesondere der UWB-Sendeempfänger, dazu ausgeführt ist, als eine Detektionseinheit, vorzugsweise durch eine Auswertung einer Laufzeit von UWB-Impulsen, zu dienen,
insbesondere als eine der folgenden Detektionseinheiten:
- Näherungssensor,
- Bewegungssensor, und/oder
- Bewegungsmustererkennungssensor.

Auf diese Weise können vorteilhafte Fahrzeugfunktionen bei der Außenraumüberwachung des Fahrzeuges mithilfe der UWB-Sensoreinheit auf eine verbesserte Weise bereitgestellt werden.

Vorteilhafterweise kann die UWB-Sensoreinheit, insbesondere der UWB-Sendeempfänger, dazu ausgeführt sein, eine Kommunikation, insbesondere mithilfe einer digitalen Funkübertragung, vorzugsweise mithilfe einer Pulsphasenmodulation, durchzuführen, um eine Information, insbesondere eine Authentifizierungsinformation eines Benutzers, von dem benutzerseitigen Mobilgerät abzufragen, zu empfangen und/oder zu verifizieren. Somit kann die Berechtigung des Benutzers verifiziert werden. Somit kann die Sicherheit im Betrieb des Betätigungssystems erhöht, sodass nur ein berechtigter Benutzer das bewegliche Teil betätigen kann.

Des Weiteren kann es von Vorteil sein, dass die UWB-Sensoreinheit, insbesondere der UWB-Sendeempfänger, dazu ausgeführt ist, die Ergebnisse der Kommunikation und/oder der Detektion an das benutzerseitige Mobilgerät zu übertragen. Auf diese Weise kann der Benutzer die Richtigkeit der Betätigung überprüfen, wodurch das Vertrauen in das Betätigungssystem erhöht werden kann.

Ferner kann die Erfindung bei einem Betätigungssystem vorsehen, dass die UWB-Sensoreinheit, insbesondere die Verarbeitungsvorrichtung und/oder die Schnittstelle, dazu ausgeführt ist, eine Information, insbesondere eine Authentifizierungsinformation eines Benutzers, und/oder einen, insbesondere durch die Verarbeitungsvorrichtung berechneten, Funktionscode für eine entsprechende Betätigungsfunktion an das fahrzeugseitige Steuergerät und/oder direkt an das bewegliche Teil zu übertragen.

Zudem ist es denkbar, dass die UWB-Sensoreinheit, insbesondere die Verarbeitungsvorrichtung und/oder die Schnittstelle, dazu ausgeführt sein kann, die UWB-Sensoreinheit an ein Sicherheitssystem, insbesondere ein Zugangssystem, des Fahrzeuges funktional anzuschließen.

Vorteilhafterweise kann die UWB-Sensoreinheit mithilfe der Verarbeitungsvorrichtung und/oder der Schnittstelle fertige Funktionscodes für entsprechende Betätigungsfunktionen generieren und direkt an ein Schließsystem des beweglichen Teils übertragen. Somit kann die UWB-Sensoreinheit ein autonomes Betätigungssystem bilden, welches unabhängig von dem Steuergerät des Fahrzeuges agieren kann, um das bewegliche Teil zu betätigen. Auch dabei kann es vorteilhaft sein, dass die UWB-Sensoreinheit mit sämtlichen Komponenten innerhalb eines Gehäuses aufgenommen sein kann. Das Gehäuse kann zumindest ein Gehäuseelement aufweisen, welches im Nachfolgenden im Detail beschrieben wird.

Weiterhin kann die Erfindung bei einem Betätigungssystem vorsehen, dass die UWB-Sensoreinheit, insbesondere die Schnittstelle, einen Stecker aufweist, um die UWB-Sensoreinheit elektrisch, elektronisch und/oder datentechnisch an das fahrzeugseitige Steuergerät anzuschließen. Vorteilhafterweise kann der Stecker dazu ausgeführt sein, die UWB-Sensoreinheit als eine einzeln handhabbare Einheit am Fahrzeug zu befestigen. Auf diese Weise kann die UWB-Sensoreinheit als eine kombinierte, einzeln handhabbare und/oder zusammenhängende, Moduleinheit einfach und bequem am oder im Fahrzeug angeschlossen und vorzugsweise zugleich befestigt werden.

Des Weiteren kann die Erfindung bei einem Betätigungssystem vorsehen, dass die UWB-Sensoreinheit, insbesondere der Stecker, mindestens ein Rastelement aufweist, um die UWB-Sensoreinheit form- und/oder kraftschlüssig am Fahrzeug zu befestigen. Somit kann die UWB-Sensoreinheit nicht nur einfach und bequem sondern auch reversibel, bspw. zwecks Austausches oder Reparatur, am oder im Fahrzeug befestigt werden.

Zudem kann die Erfindung bei einem Betätigungssystem vorsehen, dass die UWB-Sensoreinheit, insbesondere der Stecker, mindestens ein Führungselement aufweist, um die UWB-Sensoreinheit bei der Befestigung am Fahrzeug in einer vordefinierten Richtung zu führen. Auf diese Weise kann die Montage UWB-Sensoreinheit am oder im Fahrzeug erleichtert werden. Das Führungselement kann zudem dafür sorgen, dass die Moduleinheit in der richtigen Position am oder im Fahrzeug befestigt wird.

Außerdem kann die Erfindung bei einem Betätigungssystem vorsehen, dass ein Gehäuseelement vorgesehen ist, um die UWB-Sensoreinheit zumindest zum Teil oder vollumfänglich, umzuschließen und/oder abzudichten. Auf diese Weise kann die UWB-Sensoreinheit von den Umwelteinflüssen geschützt werden. Das Gehäuseelement kann dabei vorzugsweise aus Kunststoff ausgeführt sein, um die UWB-Pulse durchzulassen.

Ferner kann die Erfindung bei einem Betätigungssystem vorsehen, dass das Gehäuseelement in Form einer Gehäuseschale ausgeführt ist, die vorzugsweise nach der Befestigung der UWB-Sensoreinheit am Fahrzeug über der UWB-Sensoreinheit befestigt wird, um die UWB-Sensoreinheit abzudecken und/oder abzudichten. Somit kann eine elegante Lösung bereitgestellt werden, um die UWB-Sensoreinheit zuerst zu befestigen und danach abzudecken und/oder abzudichten.

Weiterhin kann die Erfindung bei einem Betätigungssystem vorsehen, dass das Gehäuseelement eine erste Gehäuseschale und eine zweite Gehäuseschale aufweist, um die UWB-Sensoreinheit vollumfänglich umzuschließen und/oder abzudichten. Auf diese Weise kann die UWB-Sensoreinheit bereits vor der Montage am oder im Fahrzeug als eine vollständig abgeschlossene und/oder abgedichtete Baueinheit bereitgestellt werden.

Des Weiteren kann die Erfindung bei einem Betätigungssystem vorsehen, dass das Gehäuseelement mindestens ein Rastelement aufweist, um das Gehäuseelement form- und/oder kraftschlüssig am oder im Fahrzeug oder an der UWB-Sensoreinheit zu befestigen, und/oder dass das Gehäuseelement mindestens ein Führungselement aufweist, um das Gehäuseelement bei der Befestigung am oder im Fahrzeug oder an der UWB-Sensoreinheit in einer vordefinierten Richtung zu führen. Auf diese Weise kann die Befestigung des Gehäuseelementes zusammen mit der UWB-Sensoreinheit am oder im Fahrzeug oder des Gehäuseelementes ohne die UWB-Sensoreinheit an der UWB-Sensoreinheit, die bereits am Fahrzeug befestigt ist, einfach und bequem sowie reversibel erfolgen.

Darüber hinaus wird die erfindungsgemäße Aufgabe durch ein Fahrzeug mit mindestens einem Betätigungssystem für mindestens ein bewegliches Teil des Fahrzeuges gelöst, das wie oben beschrieben ausgeführt sein kann. Mithilfe des erfindungsgemäßen Fahrzeuges werden die gleichen Vorteile erreicht, die oben im Zusammenhang mit dem Betätigungssystem beschrieben wurden. Auf diese Vorteile wird vorliegend vollumfänglich Bezug genommen.

Vorteilhafterweise können/kann im oder am Fahrzeug eine oder mehrere UWB-Sensoreinheiten für ein, für mehrere oder für jedes bewegliches Teil des Fahrzeuges vorgesehen sein. Zudem ist es denkbar, dass eine oder mehrere UWB-Sensoreinheiten, insbesondere innenseitig, an einem Heckbereich, an einem Stoßfänger, an einem Diffusor, an einem Strukturbauteil, an einer A-, B-, und/oder C-Säule, an einem Seitenbereich und/oder an einem entsprechenden beweglichen Teil angeordnet sein kann/können. Auf diese Weise können mithilfe des Betätigungssystems verschiedene Betätigungsfunktionen für unterschiedliche bewegliche Teile bereitgestellt werden.

Vorteilhafterweise kann bei einer Moduleinheit vorgesehen sein, dass nicht nur die Ergebnisse der Kommunikation und/oder der Detektion an ein benutzerseitiges Mobilgerät, insbesondere Mobiltelefon, übertragen werden, sondern auch ein Befehlscode.

Der Befehlscode kann dazu dienen, das Mobilgerät zu veranlassen, einen Benutzer über die Interaktion mit der Moduleinheit (d. h. über die Ergebnisse der Kommunikation und/oder der Detektion und/oder über entsprechende Fahrzeugfunktionen), die mithilfe der Moduleinheit aktiviert wurden, zu informieren.

Mit anderen Worten kann die Moduleinheit das benutzerseitige Mobilgerät, insbesondere Mobiltelefon, veranlassen, einen Benutzer über die Interaktion mit der Moduleinheit (d. h. über die Ergebnisse der Kommunikation und/oder der Detektion und/oder über entsprechende Fahrzeugfunktionen), die mithilfe der Moduleinheit aktiviert wurden, zu informieren.

Das benutzerseitige Mobilgerät kann zum Informieren des Benutzers eine haptische Rückmeldung, bspw. durch Vibration, z. B. mithilfe einer Piezoeinheit, eine akustische Rückmeldung, bspw. durch Klingeln, und/oder eine visuelle Rückmeldung, bspw. durch Anzeigen im Display, erzeugen.

Eine haptische, akustische und/oder visuelle Rückmeldung durch das Mobilgerät kann für schlüssellose und/oder berührungslose Zugangssysteme zu einem Fahrzeug oder zu einem anderen Objekt, wie. z. B. Garage, von Vorteil sein, bspw.:
- zum Ver- und/ oder Entriegeln einer Zentralverriegelung, sog. Aktiv-Keyless-Entry-Systeme oder Passiv-Keyless-Entry-Systeme, und/oder
- zum Öffnen und/oder Schließen von beweglichen Klappen, sog. Bewegungs- und/oder Gestikkontrolle, vorzugsweise für eine kontaktlose Betätigung von Klappen, insbesondere Heckklappen, Tankklappen, Steckerklappen, Türen, Türgriffen und/oder Spiegeln,
- zum Betätigen, bspw. zum Öffnen und/oder Schließen, eines Garagentors.

Der Benutzer kann über das Vibrieren/Klingeln des Mobilgeräts eine haptische/akustische Rückmeldung erhalten, dass seine Bewegung/Geste erkannt wurde, und/oder dass der Zugang zum Fahrzeug gewährt wurde, und/oder dass eine bewegliche Klappe, wie gewollt, geöffnet wird usw.. Dies kann nicht nur zur Steigerung des Komforts, sondern auch zum Erhöhen der Sicherheit bei dem Auslösen von Fahrzeugfunktion führen, die mithilfe der Moduleinheit aktiviert werden.

Eine haptische, akustische und/oder visuelle Rückmeldung durch das Mobilgerät kann weiterhin beim Navigieren in einem Parkhaus, bspw. beim Erreichen eines Garagentors vorteilhaft sein.

Bei Fahrzeugassistenzsystemen, wie z. B. Sitzplatzbelegungserkennung, Kind-im-Kindersitz-Erkennung und/oder Hund-im-Fahrzeug-Erkennung, kann es weiterhin von Vorteil sein, wenn die Ergebnisse der Kommunikation und/oder der Detektion, die mithilfe der Moduleinheit durchgeführt wurden, und/oder über entsprechende Fahrzeugfunktionen, die mithilfe der Moduleinheit aktiviert wurden, an ein benutzerseitiges Mobilgerät übertragen werden. Auch dabei kann zusätzlich ein Befehlscode von der Moduleinheit an das Mobilgerät übertragen werden.

Das benutzerseitige Mobilgerät kann zum Informieren des Benutzers eine Meldung/Warnung/Alarmierung ausgeben. Eine Meldung/Warnung/Alarmierung kann insbesondere dann ausgegeben werden, wenn sich bspw. noch ein Kind oder ein Hund im Fahrzeug befindet. Die Meldung/Warnung/Alarmierung kann visuell, bspw. durch Anzeigen im Display, haptisch, bspw. durch Vibrieren, und/oder akustisch, bspw. durch Klingeln des Mobilgeräts, ausgegeben werden.

Weiterhin kann eine Warnung/Alarmierung in Abhängigkeit von der Entfernung zum Fahrzeug und/oder eines Zustandes des Fahrzeuges (bspw. Zentralverriegelung geschlossen) ausgegeben werden. Die Frequenz und/oder die Lautstärke der Warnung/Alarmierung können dabei stufenweise erhöht werden, wenn der Benutzer sich vom Fahrzeug weiter entfernt. Dabei kann es sich um eine Warn-Kaskade handeln.

Denkbar sind des Weiteren folgende Szenarien:
- Bei einem Motorausstellen erfolgt eine visuelle Meldung, bspw. durch Anzeige im Display des Mobilgeräts.
- Bei einem Verlassen und einer Entfernung vom Fahrzeug erfolgt eine haptische und/oder akustische Warnung/Alarmierung, bspw. durch Vibration und/oder Klingeln, des Mobilgeräts, ggf. mit abgestuften Frequenz und/oder Lautstärke der Warnung/Alarmierung, einer sog. Warn-Kaskade.

Zunächst kann bei einem Motorausstellen und/oder einer kleinen Entfernung zum Fahrzeug, bspw. von ung. 1 oder 2 Meter, dem Benutzer über das Mobilgerät mitgeteilt werden, dass sich ein Kind oder ein Hund im Fahrzeug befindet. Daraufhin kann dem Benutzer über das Mobilgerät eine Eingabemöglichkeit angeboten werden, zum Bestätigen, dass alles in Ordnung ist, bspw. wenn er nur kurz die Garage zu macht oder an den Kofferraum geht. Bei großer Entfernung, bspw. über 1 oder 2 Meter, und ohne eine Aktion des Benutzers kann eine haptische und/oder akustische Warnung/Alarmierung durch das Mobilgerät erfolgen. Zudem kann ein Alarm am Fahrzeug ausgelöst werden.

Zusätzlich kann ein einfaches Verriegeln von Türen/Klappen verhindert werden, wenn sich ein Kind/Hund im Fahrzeug befindet, nachdem aber der Benutzer das Fahrzeug verlassen hat.

Ferner kann eine doppelte Sicherheitsfunktion zum Verriegeln von Türen/Klappen vorgesehen werden. Der Nutzer muss hierzu aktiv und wiederholend, bspw. zwei Mal, das Verriegeln des Fahrzeuges auffordern, bevor die Verriegelung tatsächlich durchgeführt wird.

Weiterhin kann es vorteilhaft sein, wenn die Moduleinheit dazu ausgeführt ist, eine Gestensteuerung im Innenraum für mindestens eine der folgenden Fahrzeugfunktionen bereitzustellen, wie z. B.:
- Steuerung von Licht im Innenraum, insbesondere im Rücksitzbereich,
- Steuerung von Radio,
- Steuerung von Klimaanlage, usw.

Ferner wird die erfindungsgemäße Aufgabe durch ein Verfahren zum Betätigen eines beweglichen Teils, insbesondere einer Tür oder einer Klappe, eines Fahrzeuges, mithilfe eines Betätigungssystem, welches wie oben beschrieben ausgeführt sein kann, umfassend mindestens eine UWB-Sensoreinheit, wobei die UWB-Sensoreinheit in einem ersten Modus als eine Detektionseinheit zum Durchführen einer Detektion eines Bewegungsmusters betrieben wird, und wobei die UWB-Sensoreinheit in einem zweiten Modus als eine Kommunikationseinheit zum Durchführen einer Kommunikation mit einem benutzerseitigen Mobilgerät betrieben wird, um mindestens ein Ergebnis der Detektion und/oder Kommunikation an das fahrzeugseitige Steuergerät zu übermitteln und in Abhängigkeit von dem Ergebnis das bewegliche Teil zu betätigen. Mithilfe des erfindungsgemäßen Verfahrens werden die gleichen Vorteile erreicht, die oben im Zusammenhang mit dem Betätigungssystem beschrieben wurden. Auf diese Vorteile wird vorliegend vollumfänglich Bezug genommen.

Weiterhin kann die Erfindung bei einem Verfahren vorsehen, dass die UWB-Sensoreinheit simultan in dem ersten Modus und in dem zweiten Modus betrieben wird, oder dass die UWB-Sensoreinheit alternierend in dem ersten Modus oder in dem zweiten Modus betrieben wird. Je nach gewünschten Spezifikationen der Moduleinheit kann die eine oder die andere Art die Moduleinheit zu betreiben vorteilhaft sein. Bei einem alternierenden Betrieb der Moduleinheit kann sichergestellt werden, dass sich die Kommunikation und Detektion nicht überlagern. Bei einem synchronen Betrieb der Moduleinheit können die Kommunikation und die Detektion parallel erfolgen und die Betätigungsfunktionen schnell bereitgestellt werden.

Zudem kann die Erfindung bei einem Verfahren vorsehen, dass die UWB-Sensoreinheit in dem ersten Modus oder in dem zweiten Modus abhängig von einer Geschwindigkeit und/oder einem Zustand des Fahrzeuges betrieben wird. Auf diese Weise kann die Funktionalität der UWB-Sensoreinheit vorteilhaft erweitert werden.

Außerdem kann die Erfindung bei einem Verfahren vorsehen, dass die Moduleinheit in dem ersten Modus dazu benutzt wird, eine Detektion, insbesondere mithilfe einer Laufzeitmessung von UWB-Impulse, durchzuführen, um:
- eine Präsenz eines Benutzers bzw. einer Person und/oder eines Objekts,
- einen Abstand zu einem Benutzer und/oder einem Objekt,
- eine Position eines Benutzers und/oder eines Objekts, und/oder
- eine Annäherung eines Benutzers und/oder eines Objekts,
- einen bestimmten Bewegungsablauf durch eine Hand oder einen Fuß des Benutzers.

Darüber hinaus kann die Erfindung bei einem Verfahren vorsehen, dass die UWB-Sensoreinheit in dem ersten Modus dazu benutzt wird, mindestens ein Fahrzeugassistenzsystem für eine Außenraumüberwachung zu unterstützen, wie insbesondere:
- Näherungssensor,
- Bewegungssensor, und/oder
- Bewegungsmustererkennungssensor.

Ferner kann die Erfindung bei einem Verfahren vorsehen, dass die UWB-Sensoreinheit in dem zweiten Modus dazu benutzt wird, eine Kommunikation, insbesondere mithilfe einer digitalen Funkübertragung, vorzugsweise mithilfe einer Pulsphasenmodulation, durchzuführen, um eine Information, insbesondere eine Authentifizierungsinformation eines Benutzers, von einem benutzerseitigen Mobilgerät abzufragen, zu empfangen und/oder zu verifizieren, und/oder dass die UWB-Sensoreinheit in dem zweiten Modus dazu genutzt wird, um die Ergebnisse der Kommunikation und/oder der Detektion an das benutzerseitige Mobilgerät zu senden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigt:
- Fig. 1: eine beispielhafte Darstellung eines Betätigungssystems im Sinne der Erfindung in einer Seitenansicht auf ein Fahrzeug,
- Fig. 2: eine beispielhafte Darstellung eines Betätigungssystems im Sinne der Erfindung in einer Draufsicht auf ein Fahrzeug,
- Fig. 3: eine schematische Darstellung einer UWB-Sensoreinheit im Sinne der Erfindung mit einer UWB-Antennen-Einheit,
- Fig. 4: eine schematische Darstellung einer UWB-Sensoreinheit im Sinne der Erfindung mit mehreren UWB-Antennen-Einheiten,
- Fig. 5: eine schematische Darstellung einer UWB-Sensoreinheit im Sinne der Erfindung mit mehreren UWB-Antennen-Einheiten,
- Fig. 6: eine schematische Darstellung eines weiteren möglichen Betätigungssystems im Sinne der Erfindung,
- Fig. 7: eine schematische Darstellung einer UWB-Sensoreinheit im Sinne der Erfindung mit einem Stecker,
- Fig. 8: eine schematische Darstellung einer UWB-Sensoreinheit im Sinne der Erfindung mit einem Gehäuseelement,
- Fig. 9: eine schematische Darstellung einer UWB-Sensoreinheit im Sinne der Erfindung mit zwei Gehäuseschalen.

In den nachfolgenden Figuren werden für die gleichen technischen Merkmale auch von unterschiedlichen Ausführungsbeispielen die identischen Bezugszeichen verwendet.

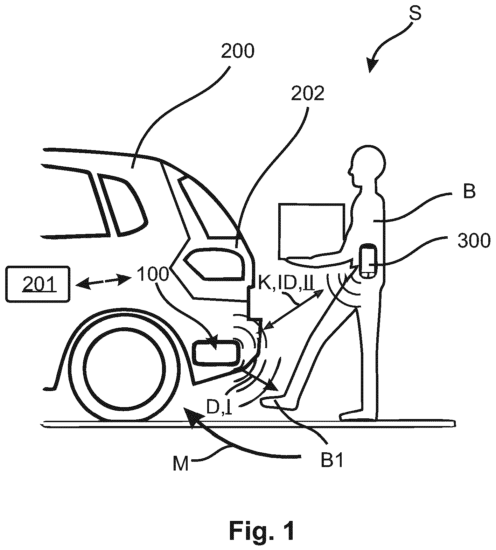

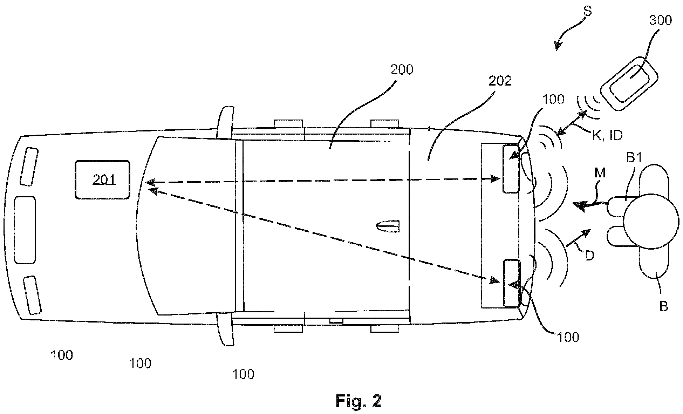

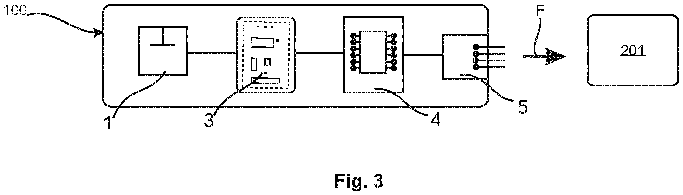

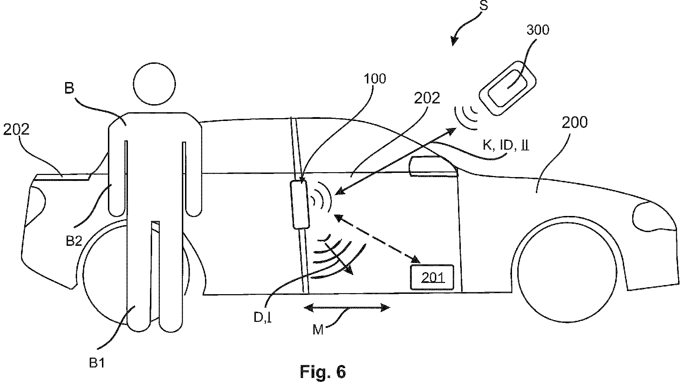

Die Figuren 1, 2 und 6 zeigen jeweils ein beispielhaftes Betätigungssystem S für ein bewegliches Teil 202, insbesondere eine Tür (vgl. Figur 6) oder eine Klappe (vgl. Figuren 1 und 2), eines Fahrzeuges 200, vorzugsweise in Form eines Zugangssystems zu einem Fahrzeuginnenraum, einem Funktionsraum oder einem Funktionselement des Fahrzeuges 200, wobei noch weitere Ausführungsbeispiele des Betätigungssystems S denkbar sind. Das Betätigungssystem S im Sinne der Erfindung weist mindestens eine UWB-Sensoreinheit 100 auf, die ebenfalls als eine Moduleinheit bezeichnet werden kann. Gemäß der Erfindung ist die (gemeint ist ein und dieselbe) UWB-Sensoreinheit 100 zum Durchführen einer Detektion D (d. h. einer Erfassung mit nur einem Gerät 100) eines Bewegungsmusters M eines Benutzers B, insbesondere eines Körperteils B1, B2, vorzugsweise eines Fußes B1 oder einer Hand B2, des Benutzers B, ausgeführt. Zugleich ist die UWB-Sensoreinheit 100 zum Durchführen einer Kommunikation K (d. h. eines Datenaustausches zwischen zwei Geräten 100, 300) mit einem benutzerseitigen Mobilgerät 300 ausgeführt ist, um mindestens ein Ergebnis der Detektion D und/oder Kommunikation K an das fahrzeugseitige Steuergerät 201 zu übermitteln und in Abhängigkeit von dem Ergebnis das bewegliche Teil 202 zu betätigen. Beispielhafte UWB-Sensoreinheiten 100 sind in den Figuren 3 bis 5 und 7 bis 9 gezeigt.

Wie es die Figuren 3 bis 5 und 7 bis 9 verdeutlichen, kann die UWB-Sensoreinheit 100 einen UWB-Sendeempfänger 3, bspw. in Form eines UWB-Front-End-Moduls, aufweisen. Die UWB-Sensoreinheit 100 kann ferner eine Verarbeitungsvorrichtung 4, bspw. in Form einer elektronischen Verarbeitungsanordnung, aufweisen, die zur Verarbeitung bspw. einen Mikrocontroller nutzen kann. Die Verarbeitungsvorrichtung 4 kann den UWB-Sendeempfänger 3 ansteuern und die elektrischen Signale, die von dem UWB-Sendeempfänger 3 gesendet und/oder empfangen werden, verarbeiten, um die Kommunikation K und/oder die Detektion D auszuwerten und ein Ergebnis bzw. eine Information anhand der Kommunikation K und/oder der Detektion D zu erhalten. Auch kann die Verarbeitungsvorrichtung 4 in Abhängigkeit von der Auswertung der Kommunikation K und/oder der Detektion D einen fertigen Funktionscode F zum Betätigen (umfassend Betätigungsfunktionen, wie z. B: Öffnen, Schließen, Entriegeln, Verriegeln) des beweglichen Teils 202 generieren, um eine entsprechende Betätigungsfunktion zu triggern.

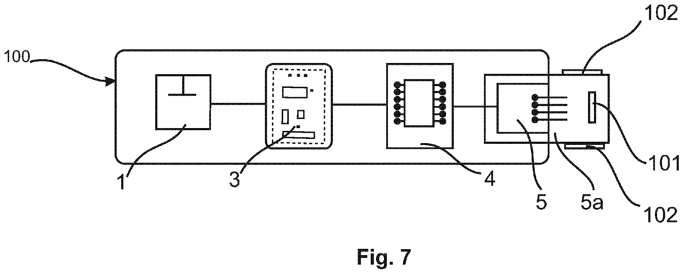

Die UWB-Sensoreinheit 100 kann zudem eine Schnittstelle 5, bspw. in Form einer elektronischen Schnittstelle aufweisen, welche die UWB-Sensoreinheit 100 elektrisch, steuerungstechnisch und datentechnisch mit einem Steuergerät 201 des Fahrzeuges 200 verbinden kann, um z. B. über die Schnittstelle die Ergebnisse der Kommunikation K und/oder der Detektion D an das Steuergerät 201 zu übermitteln und/oder über die Schnittstelle 5 mindestens eine entsprechende Betätigungsfunktion zum Betätigen des beweglichen Teils 202 in Abhängigkeit von der Kommunikation K und/oder der Detektion D zu triggern. Die Schnittstelle 5 wird außerdem in Verbindung mit der Figur 7 beschrieben.

Zudem ist es denkbar, dass die UWB-Sensoreinheit 100 über die Schnittstelle 5, bspw. in Form einer elektronischen Schnittstelle, aufweisen kann, welche die UWB-Sensoreinheit 100 elektrisch, steuerungstechnisch und datentechnisch mit einem Schließsystem des beweglichen Teils 202 verbinden kann, um das bewegliche Teil 202 zu betätigen. Somit kann die UWB-Sensoreinheit 100 ein autonomes Betätigungssystem S bilden, um das bewegliche Teil 202 unabhängig von dem Steuergerät 201 des Fahrzeuges 200 zu betätigen. Die Verarbeitungsvorrichtung 4 kann dabei ein autonomes Steuergerät zum Betätigen des beweglichen Teils 202 bilden.

Die elektrischen Signale, die von dem UWB-Sendeempfänger 3 der UWB-Sensoreinheit 100 gesendet und/oder empfangen werden, können für die Kommunikation K und/oder die Detektion D spezifisch sein. Anhand der elektrischen Signale kann ein Ergebnis der Detektion D und/oder der Kommunikation K durch die Verarbeitungsvorrichtung 4 ermittelt werden.

Ein Ergebnis einer Detektion D kann wenigstens eine Information darüber umfassen, ob sich ein Benutzer B bzw. eine Person und/oder ein Objekt in der Nähe der UWB-Sensoreinheit 100 befindet, sich der UWB-Sensoreinheit 100 nähert, sich bewegt oder sich auf eine besondere Weise bewegt.

Ein Ergebnis einer Kommunikation K zwischen der UWB-Sensoreinheit 100 und einem benutzerseitigen Mobilgerät 300 kann wenigstens eine Information über den Benutzer B, z. B. eine Authentifizierungsinformation ID, umfassen.

Über die Schnittstelle 5 kann die UWB-Sensoreinheit 100 nicht nur die Authentifizierungsinformation ID und/oder ein Ergebnis der Detektion D und/oder Kommunikation K, sondern auch ein Funktionscode F zum Betätigen des beweglichen Teils 202 an das benutzerseitige Gerät 201 oder an ein Schließsystem des beweglichen Teils 202 übertragen.

Ein Ergebnis einer Kommunikation K zwischen der UWB-Sensoreinheit und/oder dem benutzerseitigen Mobilgerät 300 kann außerdem auch Navigationsdaten, Nachrichtendaten, Musikdaten, aber auch Betätigungsdaten für eine fahrzeugseitige Vorrichtung, wie. z. B. Beleuchtung, Heizung, Klimaanlage und dergleichen, umfassen.

Ein Signal für die Kommunikation K kann z. B. eine definierte Folge kurzer UWB-Impulse sein. Die definierte Folge kurzer UWB-Impulse, die bspw. mit Zeitstempeln versehen werden können, kann mithilfe der Pulsphasenmodulation im Rahmen einer digitalen Funkübertragung erzeugt werden. Dabei wird ein UWB-Puls relativ zu einem konstanten Referenztakt in der zeitlichen Lage, nämlich der Phase, verschoben. Die Phasenverschiebung zwischen den UWB-Impulsen symbolisiert dabei die Information, wie z. B. eine Authentifizierungsinformation ID. Die Periodendauer und die Amplitude der UWB-Impulse bleiben dabei gleich.

Ein UWB-Impuls kann bspw. als ein Teil einer Sinusschwingung von einer begrenzten Dauer von wenigen Nanosekunden oder sogar Pikosekunden abgebildet werden, der einer breiten Spektrallinie von mindestens 5 GHz, insbesondere von 7,5 GHz, bis über 8,8 GHz entspricht.

Aufgrund der extrem kurzen UWB-Impulse kann eine hohe Übertragungsrate von 480 bis 1320 Mbit/s bei der Kommunikation erzielt werden, bspw. mithilfe einer digitalen Funkübertragung.

Aufgrund der extrem kurzen UWB-Impulse kann eine hohe Auflösung von wenigen Millimetern bis sogar Mikrometern bei der Detektion erzielt werden, bspw. mithilfe einer Laufzeitmessung der UWB-Impulse.

Die Erfindung erkennt, dass mithilfe der UWB-Technologie eine hoch aufgelöste Detektion zwecks Bewegungsmustererkennung, mit der Auflösung von wenigen Millimetern bis sogar Mikrometern erzielt werden kann, bspw. mithilfe einer Laufzeitmessung der UWB-Impulse. Dabei kann das erfindungsgemäße Betätigungssystem S feinste Bewegungsmuster M, erkannt werden. Ein Bewegungsmuster M im Beispiel der Figuren 1 und 2 kann bspw. eine Kickbewegung, eine Hinbewegung, eine Zurückbewegung und/oder eine Trittbewegung mit einem Fuß B1 des Benutzers B sein. Auch feinste Zehnen-Bewegungen können durch das erfindungsgemäße Betätigungssystem S erkannt werden. In dem Beispiel der Figur 6 kann ein Bewegungsmuster M in Form einer Hin- und/oder Herbewegung mit einer Hand B2 des Benutzers sein.

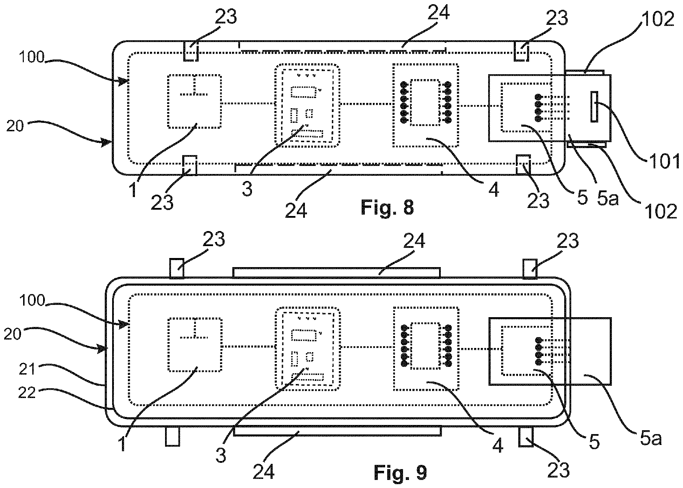

Vorteilhafterweise kann die Erfindung vorsehen, dass die UWB-Sensoreinheit 100 mit der Verarbeitungsvorrichtung 4 ein fertiges, modulares und autonomes Betätigungssystem S zum Betätigen des beweglichen Teils 202 bilden können. Gemeint ist dabei, dass die Verarbeitungsvorrichtung 4 die Steuerung des beweglichen Teils 202 übernehmen bzw. ein Steuergerät zum Betätigen des beweglichen Teils 202 bilden kann. Vorzugsweise ist die UWB-Sensoreinheit 100 mit der Verarbeitungsvorrichtung 4 in einem Gehäuseelement 20 aufgenommen, wie es im Detail im Nachfolgenden in Verbindung mit den Figuren 8 und 9 beschrieben wird.

Mithilfe von mehreren UWB-Sensoreinheiten 100 kann das erfindungsgemäße Betätigungssystem S komplizierte 2D- oder 3D-Bewegungsmuster schnell und hochaufgelöst erkennen.

Für unterschiedlichen Betätigungsfunktionen kann das erfindungsgemäße Betätigungssystem S unterschiedliche Bewegungsmuster M bezüglich der mindestens einen UWB-Sensoreinheit 100, erkennen. Denkbar ist dabei, dass das Betätigungssystem S dazu ausgeführt sein kann, eine erste Bewegungssequenz, insbesondere in eine erste Richtung, zu erfassen, die bspw. dazu dienen kann, eine Öffnung des beweglichen Teils 202 zu bewirken, und/oder dass das Betätigungssystem S dazu ausgeführt sein kann, eine zweite Bewegungssequenz, insbesondere in eine zweite Richtung, die vorzugsweise der ersten Richtung entgegengesetzt ist, zu erfassen, die bspw. dazu dienen kann, eine Schließung des beweglichen Teils 202 zu bewirken. Ferner ist es denkbar, dass das Betätigungssystem S dazu ausgeführt sein kann, eine dritte Bewegungssequenz, insbesondere in Form einer, vorzugsweise einfachen oder zweifachen, Tippbewegung oder einer Drehbewegung in eine erste Drehrichtung, zu erfassen, die bspw. dazu dienen kann, eine Entriegelung des beweglichen Teils 202 zu bewirken, und/oder dass das Betätigungssystem S dazu ausgeführt sein kann, eine vierte Bewegungssequenz, insbesondere in Form einer, vorzugsweise einfachen oder zweifachen, Tippbewegung oder einer Drehbewegung in eine zweite Drehrichtung, die vorzugsweise der ersten Drehrichtung entgegengesetzt ist, zu erfassen, die bspw. dazu dienen kann, eine Verriegelung des beweglichen Teils 202 zu bewirken.

Das erfindungsgemäße Betätigungssystem S kann vorzugsweise nach Wunsch programmiert werden, welche Bewegungsmuster welche Betätigungsfunktionen auslösen können. Auch kann das erfindungsgemäße Betätigungssystem S nach Wunsch programmiert werden, um die Detektionsbereiche einzustellen, um bspw. die Detektion D an die Größe des Benutzers B anzupassen.

Ein entsprechendes benutzerseitiges Mobilgerät 300 kann ebenfalls ein Teil des Betätigungssystems S sein. Das Mobilgerät 300 kann vorzugsweise als ein Mobilfunktelefon, insbesondere Smartphone, oder Tablet oder Smartwatch ausgestaltet sein, um den gewünschten Datenaustausch mithilfe der Kommunikation K mit der UWB-Sensoreinheit 100 erreichen zu können.

Wie es die Figuren 1 bis 9 andeuten, kann die UWB-Sensoreinheit 100 als eine, insbesondere kombinierte, einzeln handhabbare und/oder zusammenhängende, Moduleinheit (bzw. als ein einzelner Knoten oder mit anderen Worten als ein Satellit), vorzugsweise Multifunktionseinheit, bevorzugt in Form einer Hardwareeinheit, zum Bereitstellen von unterschiedlichen Betätigungsfunktionen für ein, für mehrere oder für jedes bewegliches Teil 202 eines Fahrzeuges 200 ausgeführt sein. Vorzugsweise kann dabei die UWB-Sensoreinheit 100 ein fertiges Betätigungssystem S für ein bewegliches Teil 202 bilden. Auf diese Weise kann ein modulares, ein fertiges, modulares und autonomes Betätigungssystem S zum Betätigen des beweglichen Teils 202 bereitgestellt werden. Im Falle eines Betätigungssystems S für eine Heckklappe kann ein solches modulares Betätigungssystems S ebenfalls als ein Kicksensor-System bezeichnet werden. Auch dabei kann es von Vorteil sein, dass das Betätigungssystems S innerhalb eines Gehäuseelements 20 angeordnet ist.

Weiterhin verdeutlicht die Figur 2 schematisch, dass bei einem Betätigungssystem S im Sinne der Erfindung eine oder mehrere UWB-Sensoreinheiten 100 für ein bewegliches Teil 202 vorgesehen sein kann/können. Mehrere UWB-Sensoreinheiten 100 können bei einer Detektion D helfen, eine hohe 2D- oder 3D-Auflösung bei der Bewegungsmusterkennung zu erhalten. Mithilfe von mehreren UWB-Sensoreinheiten 100 können somit komplizierte Bewegungen hochaufgelöst erfasst werden.

Wie es die Figuren 1, 2 und 6 schematisch veranschaulichen, kann/können eine oder mehrere UWB-Sensoreinheiten 100, insbesondere innenseitig, bspw. an einem Heckbereich, an einem Stoßfänger, an einem Diffusor, an einem Strukturbauteil, an einer A-, B-, und/oder C-Säule und/oder an dem beweglichen Teil 102 angeordnet werden.

Zudem zeigen die Figuren 1, 2 und 6, dass die UWB-Sensoreinheit 100 mithilfe der Kommunikation K überprüfen kann, ob sich das passende benutzerseitige Mobilgerät 300 in der Nähe der UWB-Sensoreinheit 100 identifizieren kann, um nur einem berechtigten Benutzer B einen Zugang zu einem Fahrzeuginnenraum (bspw. Fahrgastraum), einem Funktionsraum (bspw. Kofferraum) oder einem Funktionselement (bspw. Öffnung zum Tanken oder Ladestecker) des Fahrzeuges 200 zu gewähren.

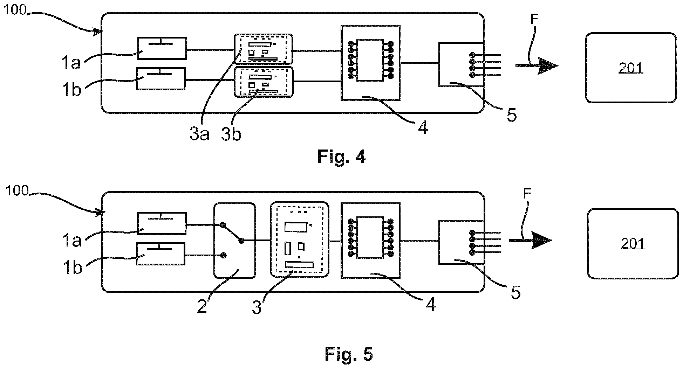

Wie es die Figuren 3 bis 5 zeigen, kann die UWB-Antenne 1 für die Kommunikation K und für die Detektion D eine gemeinsame UWB-Antennen-Einheit (vgl. die Figur 3) oder zwei separate UWB-Antennen-Einheiten 1a, 1b (vgl. die Figuren 4 und 5) aufweisen. Dabei ist es denkbar, sodass die Kommunikation K und die Detektion D simultan (vgl. die Figur 4) oder sequenziell (vgl. die Figuren 3 und 5) durchgeführt werden kann.

Die UWB-Antenne 1 kann in einem Frequenzbereich mit einer Bandbreite von mindestens 500 MHz bis mehreren MHz betrieben werden, wobei vorzugsweise der Frequenzbereich zwischen 30 MHz bis 10,6 GHz, bevorzugt zwischen 3,0 bis 10,6 GHz liegen kann. Die UWB-Antenne 1 kann bspw. mithilfe eines fotolithografischen Verfahrens auf der Leiterplatte 10 aufgetragen werden.

Wie es die Figur 4 zeigt, kann der UWB-Sendeempfänger 3 mindestens ein erstes UWB-Front-End-Modul 3a für eine erste UWB-Antennen-Einheit 1a und ein zweites UWB-Front-End-Modul 3b für eine zweite UWB-Antennen-Einheit 1b aufweisen. Somit können die erste UWB-Antennen-Einheit 1a und die zweite UWB-Antennen-Einheit 1b simultan betrieben werden.

Wie es die Figur 5 zeigt, kann der UWB-Sendeempfänger 3 als ein gemeinsames UWB-Front-End-Modul für eine erste UWB-Antennen-Einheit 1a und eine zweite UWB-Antennen-Einheit 1b ausgeführt sein. Somit können die erste UWB-Antennen-Einheit 1a und die zweite UWB-Antennen-Einheit 1b alternierend betrieben werden. Dabei kann der UWB-Sendeempfänger 3 eine Schalteinheit 2 aufweisen, um die erste UWB-Antennen-Einheit 1a und die zweite UWB-Antennen-Einheit 1b zum Durchführen der Kommunikation K oder zum Durchführen der Detektion D anzusteuern. Die Schalteinheit 2 kann bspw. als ein elektronischer Schalter, vorzugsweise ein HF-Schalter, ausgeführt sein.

Zudem kann bei einer UWB-Sensoreinheit 100 im Sinne der Erfindung vorteilhaft sein, dass die Mittelfrequenz und/oder die Bandbreite der UWB-Antenne 1 beim Durchführen einer Detektion variabel einstellbar sein können/kann. Vorteilhafterweise ist es zudem denkbar, dass zwischen unterschiedlichen Mittelfrequenzen der UWB-Antenne 1 umgeschaltet werden kann, bspw. mithilfe des UWB-Sendeempfängers 3. Somit kann die Detektion D durch die UWB-Antenne 1 an unterschiedliche Feuchtigkeitsverhältnisse flexibel angepasst werden.

Außerdem kann bei einer UWB-Sensoreinheit 100 im Sinne der Erfindung vorteilhaft sein, dass Messungen durch die UWB-Antenne 1 beim Durchführen der Detektion D mithilfe von Messungen durch die UWB-Antenne 1, insbesondere mithilfe von Laufzeiten der UWB-Pulse, beim Durchführen der Kommunikation K kalibriert werden können. Hierzu können bei der Kommunikation K die Laufzeiten der UWB-Impulse zwischen der Moduleinheit 100 und einem benutzerseitigen Mobilgerät 300 gemessen werden, welches in einem bekannten Abstand zur Moduleinheit 100 positioniert ist. Diese Laufzeiten können dazu genutzt werden, die Genauigkeit der Detektion D durch die UWB-Antenne 1, bspw. bei einer Abstandsmessung, zu verfeinern und die UWB-Antenne 1 zum Durchführen der Detektion D zu kalibrieren.

Des Weiteren kann es von Vorteil sein, dass ein Einfallswinkel der UWB-Antenne 1 variabel eingestellt werden kann, um bspw. die Messbereiche zum Durchführen der Detektion D einzustellen und/oder auszurichten.

Neben den gezeigten Beispielen in den Figuren 1 und 6 kann mithilfe der UWB-Sensoreinheit 100 eine Detektion D durchgeführt werden, um zu detektieren:
- eine Präsenz eines Benutzers B und/oder eines Objekts,
- einen Abstand zu einem Benutzer B und/oder einem Objekt,
- eine Position eines Benutzers B oder und/oder Objekts, und/oder
- eine Annäherung eines Benutzers B und/oder eines Objekts,
- einen bestimmten Bewegungsablauf durch eine Hand (B2) oder einen Fuß (B1) des Benutzers.

Auf diese Weise kann die Moduleinheit 100 als eine Detektionseinheit, vorzugsweise durch eine Auswertung einer Laufzeit von UWB-Impulsen, dienen, wie z. B.:
- Näherungssensor,
- Bewegungssensor, und/oder
- Bewegungsmustererkennungssensor.

Wie es in den Figuren 1, 2 und 6 angedeutet ist, kann der UWB-Sendeempfänger 3 der UWB-Sensoreinheit 100 dazu ausgeführt sein, die UWB-Antenne 1 zum Durchführen der Kommunikation K, bspw. mithilfe einer digitalen Funkübertragung, z. B. mithilfe einer Pulsphasenmodulation, anzusteuern, um eine Information, wie z. B. eine Authentifizierungsinformation ID eines Benutzers B, von einem benutzerseitigen Mobilgerät 300 abzufragen, zu empfangen und/oder zu verifizieren.

Weiterhin zeigen die Figuren 1, 2 und 6, dass der UWB-Sendeempfänger 3 der UWB-Sensoreinheit 100 dazu ausgeführt sein kann, die Ergebnisse der Kommunikation K und/oder der Detektion D an ein benutzerseitiges Mobilgerät 300 zu übertragen.

Die Verarbeitungsvorrichtung 4 und/oder die Schnittstelle 5 der UWB-Sensoreinheit 100 können wiederum dazu ausgeführt sein, eine Information, insbesondere eine Authentifizierungsinformation ID des Benutzers B, und/oder einen, vorzugsweise durch die Verarbeitungsvorrichtung 4 berechneten, Funktionscode F für eine gewünschte Betätigungsfunktion zum Betätigen des beweglichen Teils 202 an das fahrzeugseitige Steuergerät 201 oder an ein Schließsystem des beweglichen Teils 202 zu übertragen (vgl. die Figuren 3 bis 5). Vorteilhafterweise können dabei die Verarbeitungsvorrichtung 4 und/oder die Schnittstelle 5 dazu ausgeführt sein, die Moduleinheit 100 an ein Sicherheitssystem, insbesondere ein Warnsystem, des Fahrzeuges 200 funktional anzuschließen.

Im Allgemeinen ist es denkbar, dass die UWB-Sensoreinheit 100 für eine Außenraumüberwachung verwendet werden kann.

Wie es die Figur 7 sowie die Figuren 8 und 9 zeigen, kann die (insbesondere elektronische) Schnittstelle 5 einen (insbesondere mechanischen) Stecker 5a aufweisen, um die Moduleinheit 100 mechanisch, elektrisch und datentechnisch an das fahrzeugseitige Steuergerät 201 anzuschließen.

Wie es die Figuren 7 bis 9 andeuten, kann der Stecker 5a dazu ausgeführt sein, die UWB-Sensoreinheit 100 als eine einzeln handhabbare Einheit am oder im Fahrzeug 200 zu befestigen. Hierzu kann der Stecker 5a ein Rastelement 101 aufweisen, um die UWB-Sensoreinheit 100 form- und/oder kraftschlüssig am oder im Fahrzeug 200 zu befestigen. Zudem kann der Stecker 5a mindestens ein Führungselement 102 aufweisen, um die UWB-Sensoreinheit 100 bei der Befestigung am oder im Fahrzeug 200 in einer vordefinierten Richtung zu führen und die Befestigung der UWB-Sensoreinheit 100 zu erleichtern.

Wie es die Figuren 6 und 7 andeuten, kann bei einer UWB-Sensoreinheit 100 ein Gehäuseelement 20 vorgesehen sein, um die Moduleinheit 100 zumindest zum Teil oder vollumfänglich, zu umschließen und/oder abzudichten.

Wie es die Figur 6 andeutet, kann das Gehäuseelement 20 in Form einer Gehäuseschale ausgeführt sein, die vorzugsweise nach der Befestigung der UWB-Sensoreinheit 100 am oder im Fahrzeug 200 über der UWB-Sensoreinheit 100 befestigt werden kann, um die Moduleinheit 100 abzudecken und/oder abzudichten.

Wie es die Figur 7 andeutet, kann das Gehäuseelement 20 eine erste Gehäuseschale 21 und eine zweite Gehäuseschale 22 aufweisen, um die UWB-Sensoreinheit 100 vollumfänglich zu umschließen und/oder abzudichten. Auf diese Weise kann die Moduleinheit 100 bereits vor der Montage am oder im Fahrzeug 200 als eine vollständig abgeschlossene und/oder abgedichtete Baueinheit bereitgestellt werden.

Ebenfalls ist es möglich, dass das Gehäuseelement 20 als ein einteiliges, bspw. hüllenartiges und/oder becherartiges, Gehäuseelement, z. B. mit einem Deckel ausgeführt sein kann, um die UWB-Sensoreinheit 100 vollumfänglich zu umschließen und/oder abzudichten.

Weiterhin ist es dabei denkbar, dass die UWB-Sensoreinheit 100 innerhalb des Gehäuseelementes 20 mit einer Vergussmasse umspritzt werden kann.

Wie es die Figuren 8 und 9 zudem zeigen, kann am Gehäuseelement 20 mindestens ein Rastelement 23 vorgesehen sein, um das Gehäuseelement 20 form- und/oder kraftschlüssig am oder im Fahrzeug 200 (vgl. die Figur 7) oder an der Moduleinheit 100 (vgl. die Figur 6) zu befestigen. Ebenfalls ist es denkbar, dass das Gehäuseelement 20 mindestens ein Führungselement 24 aufweisen kann, um das Gehäuseelement 20 bei der Befestigung am oder im Fahrzeug 200 oder an der UWB-Sensoreinheit 100 in einer vordefinierten Richtung zu führen.

Im Beispiel der Figur 6 kann das Gehäuseelement 20 mithilfe des Führungselementes 24 einfach an einer korrespondierenden Führung der UWB-Sensoreinheit 100 aufgeschoben werden. Im Beispiel der Figur 7 kann das Gehäuseelement 20 mit der darin aufgenommenen UWB-Sensoreinheit 100 mithilfe des Führungselementes 24 an einer korrespondierenden Führung am oder im Fahrzeug 200 aufgeschoben werden.

Ein Fahrzeug 200 mit mindestens einem Betätigungssystem S für mindestens ein, für mehrere oder für jedes bewegliche Teil 202 des Fahrzeuges 200, das wie oben beschrieben ausgeführt sein kann, stellt ebenfalls einen Aspekt der Erfindung dar, wie es die Figuren 1 und 6 verdeutlichen.

Auch ein Verfahren zum Betätigen eines beweglichen Teils 202, insbesondere einer Tür oder einer Klappe, eines Fahrzeuges 200, mithilfe eines Betätigungssystem S, welches wie oben beschrieben ausgeführt sein kann, stellt einen Aspekt der Erfindung dar. Dabei wird die UWB-Sensoreinheit 100 in einem ersten Modus I als eine Detektionseinheit zum Durchführen einer Detektion D eines Bewegungsmusters M eines Benutzers B, insbesondere eines Körperteils B1, B2, vorzugsweise eines Fußes B1 oder einer Hand B2, des Benutzers B, betrieben. Ferner wird die UWB-Sensoreinheit 100 in einem zweiten Modus II als eine Kommunikationseinheit zum Durchführen einer Kommunikation K mit dem benutzerseitigen Gerät 300 betrieben.

Zudem kann die UWB-Sensoreinheit 100 in dem ersten Modus I oder in dem zweiten Modus II abhängig von einer Geschwindigkeit und/oder einem Zustand des Fahrzeuges 200 betrieben wird. Auf diese Weise kann die Funktionalität der UWB-Sensoreinheit 100 vorteilhaft erweitert werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- S: Betätigungssystem
- 100: Moduleinheit
- 101: Rastelement
- 102: Führungselement
- 10: Leiterplatte
- 1: UWB-Antenne
- 1a: erste UWB-Antennen-Einheit
- 1b: zweite UWB-Antennen-Einheit
- 2: Schalteinheit
- 3: UWB-Sendeempfänger
- 3a: erstes UWB-Front-End-Modul
- 3b: zweites UWB-Front-End-Modul
- 4: Verarbeitungsvorrichtung
- 5: Schnittstelle
- 5a: Stecker
- 20: Gehäuseelement
- 21: erste Gehäuseschale
- 22: zweite Gehäuseschale
- 23: Rastelement
- 24: Führungselement
- 200: Fahrzeug
- 201: Steuergerät
- 202: bewegliches Teil
- 300: Mobilgerät
- B: Benutzer
- B1: Fuß
- B2: Hand
- D: Detektion
- M: Bewegungsmuster
- K: Kommunikation
- ID: Authentifizierungsinformation
- F: Funktionscode
- I: erstes Modus
- II: zweites Modus

## Patentansprüche

1. Betätigungssystem (S) für ein bewegliches Teil (202), insbesondere eine Tür oder eine Klappe, eines Fahrzeuges (200), vorzugsweise in Form eines Zugangssystems zu einem Fahrzeuginnenraum, einem Funktionsraum oder einem Funktionselement des Fahrzeuges (200),
aufweisend:
mindestens eine UWB-Sensoreinheit (100),
wobei die UWB-Sensoreinheit (100) zum Durchführen einer Detektion (D) eines Bewegungsmusters (M) eines Benutzers (B), insbesondere eines Körperteils (B1, B2), vorzugsweise eines Fußes (B1) oder einer Hand (B2), des Benutzers (B), ausgeführt ist, und wobei die UWB-Sensoreinheit (100) zum Durchführen einer Kommunikation (K) mit einem benutzerseitigen Mobilgerät (300) ausgeführt ist,
um mindestens ein Ergebnis der Detektion (D) und/oder Kommunikation (K) an das fahrzeugseitige Steuergerät (201) zu übermitteln und in Abhängigkeit von dem Ergebnis das bewegliche Teil (202) zu betätigen.

2. Betätigungssystem (S) nach Anspruch 1,
**dadurch gekennzeichnet,**
**dass** die UWB-Sensoreinheit (100) als eine, insbesondere kombinierte, einzeln handhabbare und/oder zusammenhängende, Moduleinheit, vorzugsweise Multifunktionseinheit, bevorzugt in Form einer Hardwareeinheit, ausgeführt ist,
und/oder dass eine oder mehrere UWB-Sensoreinheiten (100) zum Betätigen des beweglichen Teils (102) vorgesehen ist/sind,
und/oder dass eine oder mehrere UWB-Sensoreinheiten (100), insbesondere innenseitig, an einem Heckbereich, an einem Stoßfänger, an einem Diffusor, an einem Strukturbauteil, an einer A-, B-, und/oder C-Säule und/oder an dem beweglichen Teil (102) angeordnet ist/sind.

3. Betätigungssystem (S) nach einem vorhergehenden Ansprüche,
**dadurch gekennzeichnet,**
**dass** das Betätigungssystem (S) dazu ausgeführt ist, einen 2D-Bewegungsmusters (M) oder einen 3D-Bewegungsmusters (M) zu detektieren,
und/oder dass das Betätigungssystem (S) dazu ausgeführt ist, eine erste Bewegungssequenz, insbesondere in eine erste Richtung, zu erfassen, die dazu dient, eine Öffnung des beweglichen Teils (202) zu bewirken,
und/oder dass das Betätigungssystem (S) dazu ausgeführt ist, eine zweite Bewegungssequenz, insbesondere in eine zweite Richtung, die vorzugsweise der ersten Richtung entgegengesetzt ist, zu erfassen, die dazu dient, eine Schließung des beweglichen Teils (202) zu bewirken,
und/oder dass das Betätigungssystem (S) dazu ausgeführt ist, eine dritte Bewegungssequenz, insbesondere in Form einer, vorzugsweise einfachen oder zweifachen, Tippbewegung oder einer Drehbewegung in eine erste Drehrichtung, zu erfassen, die dazu dient, eine Entriegelung des beweglichen Teils (202) zu bewirken,
und/oder dass das Betätigungssystem (S) dazu ausgeführt ist, eine vierte Bewegungssequenz, insbesondere in Form einer, vorzugsweise einfachen oder zweifachen, Tippbewegung oder einer Drehbewegung in eine zweite Drehrichtung, die vorzugsweise der ersten Drehrichtung entgegengesetzt ist, zu erfassen, die dazu dient, eine Verriegelung des beweglichen Teils (202) zu bewirken.

4. Betätigungssystem (S) nach einem vorhergehenden Ansprüche,
**dadurch gekennzeichnet,**
**dass** die UWB-Sensoreinheit (100) mindestens eine Leiterplatte (10) aufweist,
wobei insbesondere auf der Leiterplatte (10) mindestens eines von den folgenden Elementen angeordnet ist:
- eine UWB-Antenne (1) zum Durchführen der Kommunikation (K) und/oder der Detektion (D),
wobei in Abhängigkeit von der Kommunikation (K) und/oder der Detektion (D) unterschiedliche Betätigungsfunktionen zum Betätigen des beweglichen Teils (202) aktivierbar sind,
- ein, insbesondere elektronischer, UWB-Sendeempfänger (3) zum Aussenden und/oder Empfangen von elektrischen Signalen von der UWB-Antenne (1), die für die Kommunikation (K) und/oder die Detektion (D) spezifisch sind,
- eine, insbesondere elektronische, Verarbeitungsvorrichtung (4) zur Ansteuerung des UWB-Sendeempfängers (3), um Kommunikation (K) und/oder die Detektion (D) durch die UWB-Antenne (1) durchzuführen, und/oder
- eine, insbesondere elektronische, Schnittstelle (5) zum Übermitteln des Ergebnisses der Detektion (D) und/oder der Kommunikation (K) an das fahrzeugseitige Steuergerät (201) oder direkt an ein Schließsystem des beweglichen Teils (202), um Betätigungsfunktionen zum Betätigen des beweglichen Teils (202) in Abhängigkeit von der Kommunikation (K) und/oder der Detektion (D) einzuleiten.

5. Betätigungssystem (S) nach einem vorhergehenden Ansprüche,
**dadurch gekennzeichnet,**
**dass** die UWB-Antenne (1) in einem Frequenzbereich mit einer Bandbreite von mindestens 500 MHz oder von mindestens 20 % des arithmetischen Mittelwertes von unterer und oberer Grenzfrequenz des genutzten Frequenzbandes betreibbar ist,
wobei vorzugsweise der Frequenzbereich zwischen 30 MHz bis 10,6 GHz, bevorzugt zwischen 3,0 bis 10,6 GHz liegt,
und/oder dass die Verarbeitungsvorrichtung (4) und/oder der UWB-Sendeempfänger (3) einen Mikrocontroller aufweisen/aufweist.

6. Betätigungssystem (S) nach einem der vorhergehenden Ansprüche,
**dadurch gekennzeichnet,**
**dass** die UWB-Antenne (1) eine, insbesondere nur eine, vorzugsweise eine gemeinsame für die Kommunikation (K) und/oder die Detektion (D), UWB-Antennen-Einheit aufweist, die dazu ausgeführt ist, die Kommunikation (K) und/oder die Detektion (D) in Abhängigkeit von einer Ansteuerung durch die Verarbeitungsvorrichtung (4) durchzuführen,
oder dass die UWB-Sensoreinheit (100), insbesondere die UWB-Antenne (1), eine erste UWB-Antennen-Einheit (1a) und eine zweite UWB-Antennen-Einheit (1b) aufweist,
wobei die erste UWB-Antennen-Einheit (1a) dazu ausgeführt ist, die Kommunikation (K) durchzuführen,
und wobei die zweite UWB-Antennen-Einheit (1b) dazu ausgeführt ist, die Detektion (D) durchzuführen,
und/oder dass die UWB-Sensoreinheit (100), insbesondere der UWB-Sendeempfänger (3), mindestens ein erstes UWB-Front-End-Modul (3a) für eine erste UWB-Antennen-Einheit (1a) und ein zweites UWB-Front-End-Modul (3b) für eine zweite UWB-Antennen-Einheit (1b) aufweist,
oder dass die UWB-Sensoreinheit (100), insbesondere der UWB-Sendeempfänger (3), als ein gemeinsames UWB-Front-End-Modul, für eine erste UWB-Antennen-Einheit (1a) und eine zweite UWB-Antennen-Einheit (1b) ausgeführt ist,
und/oder dass die UWB-Sensoreinheit (100), insbesondere der UWB-Sendeempfänger (3), eine Schalteinheit (2) aufweist, um eine erste UWB-Antennen-Einheit (1a) und eine zweite UWB-Antennen-Einheit (1b) zum Durchführen der Kommunikation (K) oder zum Durchführen der Detektion (D) anzusteuern,
wobei insbesondere die Schalteinheit (2) als ein elektronischer Schalter, vorzugsweise ein HF-Schalter, ausgeführt ist.

7. Betätigungssystem (S) nach einem der vorhergehenden Ansprüche,
**dadurch gekennzeichnet,**
**dass** die UWB-Sensoreinheit (100), insbesondere der UWB-Sendeempfänger (3), derart ausgeführt ist, dass die Mittelfrequenz und/oder die Bandbreite der UWB-Antenne beim Durchführen der Detektion (D) variabel einstellbar sind/ist,
und/oder dass die UWB-Sensoreinheit (100), insbesondere der UWB-Sendeempfänger (3), derart ausgeführt ist, dass Messungen durch die UWB-Antenne (1) beim Durchführen der Detektion (D) mithilfe von Messungen durch die UWB-Antenne (1), insbesondere von Laufzeiten der UWB-Pulse, beim Durchführen der Kommunikation (K) kalibrierbar sind,
und/oder dass die UWB-Sensoreinheit (100), insbesondere der UWB-Sendeempfänger (3), derart ausgeführt ist, dass ein Einfallswinkel der UWB-Antenne (1) variabel einstellbar ist.

8. Betätigungssystem (S) nach einem der vorhergehenden Ansprüche,
**dadurch gekennzeichnet,**
**dass** die UWB-Sensoreinheit (100), insbesondere der UWB-Sendeempfänger (3), dazu ausgeführt ist, die Detektion (D) durchzuführen, um:
- eine Präsenz eines Benutzers (B) und/oder eines Objekts,
- einen Abstand zu einem Benutzer (B) und/oder einem Objekt,
- eine Position eines Benutzers (B) und/oder eines Objekts,
- eine Annäherung eines Benutzers (B) und/oder eines Objekts,
- einen bestimmten Bewegungsablauf durch eine Hand (B2) oder einen Fuß (B1) des Benutzers (B),
und/oder dass die UWB-Sensoreinheit (100), insbesondere der UWB-Sendeempfänger (3), dazu ausgeführt ist, als eine Detektionseinheit, vorzugsweise durch eine Auswertung einer Laufzeit von UWB-Impulsen, zu dienen,
insbesondere als eine der folgenden Detektionseinheiten:
- Näherungssensor,
- Bewegungssensor, und/oder
- Bewegungsmustererkennungssensor.

9. Betätigungssystem (S) nach einem der vorhergehenden Ansprüche,
**dadurch gekennzeichnet,**
**dass** die UWB-Sensoreinheit (100), insbesondere der UWB-Sendeempfänger (3), dazu ausgeführt ist, eine Kommunikation (K), insbesondere mithilfe einer digitalen Funkübertragung, vorzugsweise mithilfe einer Pulsphasenmodulation, durchzuführen,
um eine Information, insbesondere eine Authentifizierungsinformation (ID) eines Benutzers, von dem benutzerseitigen Mobilgerät (300) abzufragen, zu empfangen und/oder zu verifizieren,
und/oder dass die UWB-Sensoreinheit (100), insbesondere der UWB-Sendeempfänger (3), dazu ausgeführt ist, die Ergebnisse der Detektion (D) und/oder der Kommunikation (K) an das benutzerseitige Mobilgerät (300) zu übermitteln,
und/oder dass die UWB-Sensoreinheit (100), insbesondere die Verarbeitungsvorrichtung (4) und/oder die Schnittstelle (5), dazu ausgeführt ist, eine Information, insbesondere eine Authentifizierungsinformation (ID) eines Benutzers und/oder einen, vorzugsweise durch die Verarbeitungsvorrichtung (4) berechneten, Funktionscode (F) zum Betätigen des beweglichen Teils (202) an das fahrzeugseitige Steuergerät (201) oder direkt an ein Schließsystem des beweglichen Teils (202) zu übertragen,
und/oder dass die UWB-Sensoreinheit (100), insbesondere die Verarbeitungsvorrichtung (4) und/oder die Schnittstelle (5), dazu ausgeführt ist, die UWB-Sensoreinheit (100) an ein Sicherheitssystem, insbesondere ein Zugangssystem, des Fahrzeuges (200) funktional anzuschließen.

10. Betätigungssystem (S) nach einem der vorhergehenden Ansprüche,
**dadurch gekennzeichnet,**
**dass** die UWB-Sensoreinheit (100), insbesondere die Schnittstelle (5), einen Stecker aufweist, um die UWB-Sensoreinheit (100) mechanisch, steuerungstechnisch und/oder datentechnisch an das fahrzeugseitige Steuergerät (201) anzuschließen,
wobei insbesondere der Stecker dazu ausgeführt ist, die UWB-Sensoreinheit (100) als eine einzeln handhabbare Einheit am Fahrzeug (200) zu befestigen,
und/oder dass die UWB-Sensoreinheit (100), insbesondere der Stecker, mindestens ein Rastelement (101) aufweist, um die UWB-Sensoreinheit (100) form- und/oder kraftschlüssig am Fahrzeug (200) zu befestigen,
und/oder dass die UWB-Sensoreinheit (100), insbesondere der Stecker, mindestens ein Führungselement (102) aufweist, um die UWB-Sensoreinheit (100) bei der Befestigung am Fahrzeug (200) in einer vordefinierten Richtung zu führen.

11. Betätigungssystem (S) nach einem der vorhergehenden Ansprüche,
**dadurch gekennzeichnet,**
**dass** ein Gehäuseelement (20) vorgesehen ist, um die UWB-Sensoreinheit (100) zumindest zum Teil oder vollumfänglich, zu umschließen und/oder abzudichten,
wobei insbesondere das Gehäuseelement (20) in Form einer Gehäuseschale ausgeführt ist, die vorzugsweise nach der Befestigung der UWB-Sensoreinheit (100) am Fahrzeug (20) über der UWB-Sensoreinheit (100) befestigt wird, um die UWB-Sensoreinheit (100) abzudecken und/oder abzudichten,
oder wobei das Gehäuseelement (20) eine erste Gehäuseschale (21) und eine zweite Gehäuseschale (22) aufweist, um die UWB-Sensoreinheit (100) vollumfänglich zu umschließen und/oder abzudichten,
und/oder dass das Gehäuseelement (20) mindestens ein Rastelement (23) aufweist, um das Gehäuseelement (20) form- und/oder kraftschlüssig am oder im Fahrzeug (200) oder an der UWB-Sensoreinheit (100) zu befestigen,
und/oder dass das Gehäuseelement (20) mindestens ein Führungselement (24) aufweist, um das Gehäuseelement (20) bei der Befestigung am oder im Fahrzeug (200) oder an der UWB-Sensoreinheit (100) in einer vordefinierten Richtung zu führen.

12. Fahrzeug (200) mit mindestens einem Betätigungssystem (S) nach einem der vorhergehenden Ansprüche für mindestens ein bewegliches Teil (202) des Fahrzeuges (200).

13. Fahrzeug (200) nach dem vorhergehenden Anspruch,
**dadurch gekennzeichnet,**
**dass** eine oder mehrere UWB-Sensoreinheiten (100) für ein, für mehrere oder für jedes bewegliches Teil (202) des Fahrzeuges (200) vorgesehen ist/sind,
und/oder dass eine oder mehrere UWB-Sensoreinheiten (100), insbesondere innenseitig, an einem Heckbereich, an einem Stoßfänger, an einem Diffusor, an einem Strukturbauteil, an einer A-, B-, und/oder C-Säule und/oder an dem beweglichen Teil (102) angeordnet ist/sind.

14. Verfahren zum Betätigen eines beweglichen Teils (202), insbesondere einer Tür oder einer Klappe, eines Fahrzeuges (200), mithilfe eines Betätigungssystem (S), insbesondere nach einem der vorhergehenden Ansprüche, umfassend mindestens eine UWB-Sensoreinheit (100),
wobei die UWB-Sensoreinheit (100) in einem ersten Modus (I) als eine Detektionseinheit zum Durchführen einer Detektion (D) eines Bewegungsmusters (M) eines Benutzers (B), insbesondere eines Körperteils (B1, B2), vorzugsweise eines Fußes (B1) oder einer Hand (B2), des Benutzers (B), betrieben wird,
und wobei die UWB-Sensoreinheit (100) in einem zweiten Modus (II) als eine Kommunikationseinheit zum Durchführen einer Kommunikation (K) mit einem benutzerseitigen Mobilgerät (300) betrieben wird,
um mindestens ein Ergebnis der Detektion (D) und/oder Kommunikation (K) an das fahrzeugseitige Steuergerät (201) zu übermitteln und in Abhängigkeit von dem Ergebnis das bewegliche Teil (202) zu betätigen.

15. Verfahren nach dem vorhergehenden Anspruch,
**dadurch gekennzeichnet,**
**dass** die UWB-Sensoreinheit (100) simultan in dem ersten Modus (I) und in dem zweiten Modus (II) betrieben wird,
oder dass die UWB-Sensoreinheit (100) alternierend in dem ersten Modus (I) oder in dem zweiten Modus (II) betrieben wird,
und/oder dass die UWB-Sensoreinheit (100) in dem ersten Modus (I) oder in dem zweiten Modus (II) abhängig von einer Geschwindigkeit und/oder einem Zustand des Fahrzeuges (200) betrieben wird.

## Claims

1. Actuating system (S) for a movable part (202), in particular a door or a flap, of a vehicle (200), preferably in the form of an access system to a vehicle interior, a functional space or a functional element of the vehicle (200),
comprising:
at least one UWB sensor unit (100),
wherein the UWB sensor unit (100) is designed to perform a detection (D) of a movement pattern (M) of a user (B), in particular of a body part (B1, B2), preferably a foot (B1) or a hand (B2), of the user (B),
and wherein the UWB sensor unit (100) is adapted to perform communication (K) with a user-side mobile device (300),
in order to transmit at least one result of the detection (D) and/or communication (K) to the control unit (201) on the vehicle and to actuate the movable part (202) depending on the result.

2. Actuating system (S) according to claim 1,
**characterized in that**
the UWB sensor unit (100) is designed as a modular unit, preferably a multifunctional unit, preferably in the form of a hardware unit, in particular a combined, individually manageable and/or connected modular unit,
and/or that one or more UWB sensor units (100) is/are provided for actuating the movable part (102),
and/or that one or more UWB sensor units (100) is/are arranged, in particular on the inside, on a rear area, on a bumper, on a diffuser, on a structural component, on an A-, B- and/or C-pillar and/or on the movable part (102).

3. Actuating system (S) according to any one of the preceding claims,
**characterized in that**
the actuating system (S) is designed to detect a 2D movement pattern (M) or a 3D movement pattern (M),
and/or **in that** the actuating system (S) is designed to detect a first sequence of movements, in particular in a first direction, which serves to effect an opening of the movable part (202),
and/or **in that** the actuating system (S) is designed to detect a second sequence of movements, in particular in a second direction which is preferably opposite to the first direction, which serves to bring about closure of the movable part (202),
and/or **in that** the actuating system (S) is designed to detect a third movement sequence, in particular in the form of a preferably single or double jogging movement or a rotary movement in a first direction of rotation, which serves to effect unlocking of the movable part (202),
and/or **in that** the actuating system (S) is designed to detect a fourth movement sequence, in particular in the form of a preferably single or double jogging movement or a rotational movement in a second rotational direction, which is preferably opposite to the first rotational direction, which serves to effect a locking of the movable part (202).

4. Actuating system (S) according to any one of the preceding claims,
**characterized in that**
the UWB sensor unit (100) has at least one printed circuit board (10), wherein, in particular, at least one of the following elements is arranged on the printed circuit board (10):
- a UWB antenna (1) for carrying out communication (K) and/or detection (D),
wherein different actuating functions for actuating the movable part (202) can be activated depending on the communication (K) and/or the detection (D),
- an, in particular electronic, UWB transceiver (3) for transmitting and/or receiving electrical signals from the UWB antenna (1) which are specific for communication (K) and/or detection (D),
- an, in particular electronic, processing device (4) for controlling the UWB transceiver (3) in order to carry out communication (K) and/or detection (D) by the UWB antenna (1), and/or
- an, in particular electronic, interface (5) for transmitting the result of the detection (D) and/or the communication (K) to the control unit (201) on the vehicle or directly to a locking system of the movable part (202) in order to initiate actuating functions for actuating the movable part (202) as a function of the communication (K) and/or the detection (D).

5. Actuating system (S) according to any one of the preceding claims,
**characterized in that**
the UWB antenna (1) can be operated in a frequency range with a bandwidth of at least 500 MHz or at least 20 % of the arithmetic mean of the lower and upper cut-off frequencies of the frequency band used,
wherein the frequency range is preferably between 30 MHz and 10.6 GHz, preferably between 3.0 and 10.6 GHz,
and/or that the processing device (4) and/or the UWB transceiver (3) has/have a microcontroller.

6. Actuating system (S) according to any one of the preceding claims,
**characterized in that**
the UWB antenna (1) has one, in particular only one, preferably a common UWB antenna unit for the communication (K) and/or the detection (D), which is designed to carry out the communication (K) and/or the detection (D) as a function of a control by the processing device (4),
or **in that** the UWB sensor unit (100), in particular the UWB antenna (1), has a first UWB antenna unit (1a) and a second UWB antenna unit (1b),
wherein the first UWB antenna unit (1a) is adapted to perform the communication (K),
and wherein the second UWB antenna unit (1b) is designed to perform the detection (D), and/or **in that** the UWB sensor unit (100), in particular the UWB transceiver (3), has at least a first UWB front-end module (3a) for a first UWB antenna unit (1a) and a second UWB front-end module (3b) for a second UWB antenna unit (1b),
or **in that** the UWB sensor unit (100), in particular the UWB transceiver (3), is designed as a common UWB front-end module for a first UWB antenna unit (1a) and a second UWB antenna unit (1b),
and/or **in that** the UWB sensor unit (100), in particular the UWB transceiver (3), has a switching unit (2) for actuating a first UWB antenna unit (1a) and a second UWB antenna unit (1b) for carrying out the communication (K) or for carrying out the detection (D),
wherein in particular the switching unit (2) is designed as an electronic switch, preferably an HF switch.

7. Actuating system (S) according to any one of the preceding claims,
**characterized in that**
the UWB sensor unit (100), in particular the UWB transceiver (3), is designed in such a way that the center frequency and/or the bandwidth of the UWB antenna are/is variably adjustable when performing the detection (D),
and/or **in that** the UWB sensor unit (100), in particular the UWB transceiver (3), is designed such that measurements by the UWB antenna (1) can be calibrated when carrying out the detection (D) with the aid of measurements by the UWB antenna (1), in particular transit times of the UWB pulses, when carrying out the communication (K),
and/or that the UWB sensor unit (100), in particular the UWB transceiver (3), is designed such that an angle of incidence of the UWB antenna (1) can be variably adjusted.

8. Actuating system (S) according to any one of the preceding claims,
**characterized in that**
the UWB sensor unit (100), in particular the UWB transceiver (3), is designed to perform the detection (D) of:
- a presence of a user (B) and/or an object,
- a distance to a user (B) and/or an object,
- a position of a user (B) and/or an object,
- an approach of a user (B) and/or an object,
- a specific movement sequence by a hand (B2) or a foot (B1) of the user (B),
and/or **in that** the UWB sensor unit (100), in particular the UWB transceiver (3), is designed to serve as a detection unit, preferably by evaluating a transit time of UWB pulses,
in particular as one of the following detection units:
- Proximity sensor,
- Motion sensor, and/or
- Motion pattern recognition sensor.

9. Actuating system (S) according to any one of the preceding claims,
**characterized in that**
the UWB sensor unit (100), in particular the UWB transceiver (3), is designed to carry out communication (K), in particular with the aid of digital radio transmission, preferably with the aid of pulse phase modulation,
to request, receive and/or verify information, in particular authentication information (ID) of a user, from the user-side mobile device (300),
and/or that the UWB sensor unit (100), in particular the UWB transceiver (3), is designed to transmit the results of the detection (D) and/or the communication (K) to the user-side mobile device (300),
and/or **in that** the UWB sensor unit (100), in particular the processing device (4) and/or the interface (5), is designed to transmit information, in particular authentication information (ID) of a user and/or a function code (F), preferably calculated by the processing device (4), for actuating the movable part (202) to the vehicle-side control unit (201) or directly to a locking system of the movable part (202),
and/or **in that** the UWB sensor unit (100), in particular the processing device (4) and/or the interface (5), is designed to functionally connect the UWB sensor unit (100) to a security system, in particular an access system, of the vehicle (200).

10. Actuating system (S) according to any one of the preceding claims,
**characterized in that**
the UWB sensor unit (100), in particular the interface (5), has a connector in order to connect the UWB sensor unit (100) mechanically, in terms of control technology and/or data technology to the control unit (201) on the vehicle,
wherein, in particular, the connector is designed to attach the UWB sensor unit (100) to the vehicle (200) as an individually manageable unit,
and/or **in that** the UWB sensor unit (100), in particular the connector, has at least one latching element (101) in order to fasten the UWB sensor unit (100) to the vehicle (200) in a form-fitting and/or force-fitting manner,
and/or **in that** the UWB sensor unit (100), in particular the connector, has at least one guide element (102) in order to guide the UWB sensor unit (100) in a predefined direction when it is attached to the vehicle (200).

11. Actuating system (S) according to any one of the preceding claims,
**characterized in that**
a housing element (20) is provided to enclose and/or seal the UWB sensor unit (100) at least partially or completely,
wherein, in particular, the housing element (20) is designed in the form of a housing shell, which is preferably fastened over the UWB sensor unit (100) after the UWB sensor unit (100) has been fastened to the vehicle (20) in order to cover and/or seal the UWB sensor unit (100),
or wherein the housing element (20) comprises a first housing shell (21) and a second housing shell (22) in order to fully enclose and/or seal the UWB sensor unit (100),
and/or **in that** the housing element (20) has at least one latching element (23) in order to fasten the housing element (20) positively and/or non-positively to or in the vehicle (200) or to the UWB sensor unit (100),
and/or **in that** the housing element (20) has at least one guide element (24) in order to guide the housing element (20) in a predefined direction when it is attached to or in the vehicle (200) or to the UWB sensor unit (100).

12. A vehicle (200) comprising at least one actuating system (S) according to any one of the preceding claims for at least one movable part (202) of the vehicle (200).

13. Vehicle (200) according to the preceding claim,
**characterized in that**
one or more UWB sensor units (100) is/are provided for one, for several or for each movable part (202) of the vehicle (200),
and/or that one or more UWB sensor units (100) is/are arranged, in particular on the inside, on a rear area, on a bumper, on a diffuser, on a structural component, on an A-, B- and/or C-pillar and/or on the movable part (102).

14. Method for actuating a movable part (202), in particular a door or a flap, of a vehicle (200), by means of an actuating system (S), in particular according to one of the preceding claims, comprising at least one UWB sensor unit (100),
wherein the UWB sensor unit (100) is operated in a first mode (I) as a detection unit for performing a detection (D) of a movement pattern (M) of a user (B), in particular of a body part (B1, B2), preferably a foot (B1) or a hand (B2), of the user (B),
and wherein the UWB sensor unit (100) is operated in a second mode (II) as a communication unit for performing communication (K) with a user-side mobile device (300),
in order to transmit at least one result of the detection (D) and/or communication (K) to the control unit (201) on the vehicle and to actuate the movable part (202) depending on the result.

15. Method according to the preceding claim,
**characterized in that**
the UWB sensor unit (100) is operated simultaneously in the first mode (I) and in the second mode (II),
or that the UWB sensor unit (100) is operated alternately in the first mode (I) or in the second mode (II),
and/or that the UWB sensor unit (100) is operated in the first mode (I) or in the second mode (II) depending on a speed and/or a state of the vehicle (200).

## Revendications

1. Système d'actionnement (S) pour une partie mobile (202), notamment une porte ou un volet, d'un véhicule (200), de préférence sous la forme d'un système d'accès à un habitacle de véhicule, à un espace fonctionnel ou à un élément fonctionnel du véhicule (200),
présentant :
au moins une unité de capteur UWB (100),
dans lequel l'unité de capteur UWB (100) est réalisée pour effectuer une détection (D) d'un modèle de mouvement (M) d'un utilisateur (B), en particulier d'une partie du corps (B1, B2), de préférence un pied (B1) ou une main (B2), de l'utilisateur (B),
et dans lequel l'unité de capteur UWB (100) est adaptée pour effectuer une communication (K) avec un dispositif mobile côté utilisateur (300),
pour transmettre au moins un résultat de la détection (D) et/ou de la communication (K) à l'appareil de commande (201) du véhicule et pour actionner la partie mobile (202) en fonction du résultat.

2. Système d'actionnement (S) selon la revendication 1,
**caractérisé en ce que**
l'unité de capteur UWB (100) est réalisée sous la forme d'une unité modulaire, en particulier combinée, manipulable individuellement et/ou cohérente, de préférence une unité multifonctionnelle, de préférence sous la forme d'une unité matérielle,
et/ou **en ce qu'**une ou plusieurs unités de capteur UWB (100) est/sont prévue(s) pour actionner la partie mobile (102),
et/ou **en ce qu'**une ou plusieurs unités de capteur UWB (100) est/sont disposée(s), en particulier côté intérieur, sur une zone arrière, sur un pare-chocs, sur un diffuseur, sur un élément de structure, sur un montant A, B, et/ou C et/ou sur la partie mobile (102).

3. Système d'actionnement (S) selon l'une quelconque des revendications précédentes,
**caractérisé en ce que**
le système d'actionnement (S) est conçu pour détecter un modèle de mouvement 2D (M) ou un modèle de mouvement 3D (M),
et/ou **en ce que** le système d'actionnement (S) est adapté pour détecter une première séquence de mouvements, en particulier dans une première direction, qui sert à provoquer une ouverture de la partie mobile (202),
et/ou **en ce que** le système d'actionnement (S) est adapté pour détecter une deuxième séquence de mouvements, en particulier dans une deuxième direction, de préférence opposée à la première direction, qui sert à provoquer une fermeture de la partie mobile (202),
et/ou **en ce que** le système d'actionnement (S) est conçu pour détecter une troisième séquence de mouvements, notamment sous la forme d'un mouvement de frappe, de préférence simple ou double, ou d'un mouvement de rotation dans un premier sens de rotation, qui sert à provoquer un déverrouillage de la partie mobile (202),
et/ou **en ce que** le système d'actionnement (S) est conçu pour détecter une quatrième séquence de mouvements, notamment sous la forme d'un mouvement de frappe, de préférence simple ou double, ou d'un mouvement de rotation dans un deuxième sens de rotation, de préférence opposé au premier sens de rotation, qui sert à provoquer un verrouillage de la partie mobile (202).

4. Système d'actionnement (S) selon l'une quelconque des revendications précédentes,
**caractérisé en ce que**
l'unité de capteur UWB (100) présente au moins une carte de circuit imprimé (10),
dans lequel, en particulier, au moins l'un des éléments suivants est disposé sur la carte de circuit imprimé (10) :
- une antenne UWB (1) pour effectuer la communication (K) et/ou la détection (D), différentes fonctions d'actionnement pouvant être activées en fonction de la communication (K) et/ou de la détection (D) pour actionner la partie mobile (202),
- un émetteur-récepteur UWB (3), en particulier électronique, pour émettre et/ou recevoir des signaux électriques de l'antenne UWB (1), qui sont spécifiques à la communication (K) et/ou à la détection (D),
- un dispositif de traitement (4), en particulier électronique, pour commander l'émetteur-récepteur UWB (3) afin d'effectuer la communication (K) et/ou la détection (D) par l'antenne UWB (1), et/ou
- une interface (5), notamment électronique, pour transmettre le résultat de la détection (D) et/ou de la communication (K) à l'appareil de commande (201) du véhicule ou directement à un système de fermeture de la partie mobile (202), afin de déclencher des fonctions d'actionnement pour actionner la partie mobile (202) en fonction de la communication (K) et/ou de la détection (D).

5. Système d'actionnement (S) selon l'une quelconque des revendications précédentes,
**caractérisé en ce que**
l'antenne UWB (1) peut être exploitée dans une gamme de fréquences avec une largeur de bande d'au moins 500 MHz ou d'au moins 20 % de la valeur moyenne arithmétique de la fréquence limite inférieure et supérieure de la bande de fréquences utilisée,
la gamme de fréquences étant de préférence comprise entre 30 MHz et 10,6 GHz, de préférence entre 3,0 et 10,6 GHz,
et/ou **en ce que** le dispositif de traitement (4) et/ou l'émetteur-récepteur UWB (3) présente/présente un microcontrôleur.

6. Système d'actionnement (S) selon l'une quelconque des revendications précédentes,
**caractérisé en ce que**
l'antenne UWB (1) présente une, en particulier une seule, de préférence une unité d'antenne UWB commune pour la communication (K) et/ou la détection (D), qui est réalisée pour effectuer la communication (K) et/ou la détection (D) en fonction d'une commande par le dispositif de traitement (4),
ou **en ce que** l'unité de capteur UWB (100), en particulier l'antenne UWB (1), présente une première unité d'antenne UWB (1a) et une deuxième unité d'antenne UWB (1b),
dans lequel la première unité d'antenne UWB (1a) est adaptée pour réaliser la communication (K),
et dans lequel la seconde unité d'antenne UWB (1b) est adaptée pour effectuer la détection (D),
et/ou **en ce que** l'unité de capteur UWB (100), en particulier l'émetteur-récepteur UWB (3), présente au moins un premier module frontal UWB (3a) pour une première unité d'antenne UWB (1a) et un deuxième module frontal UWB (3b) pour une deuxième unité d'antenne UWB (1b),
ou **en ce que** l'unité de capteur UWB (100), en particulier l'émetteur-récepteur UWB (3), est réalisée sous la forme d'un module frontal UWB commun, pour une première unité d'antenne UWB (1a) et une deuxième unité d'antenne UWB (1b),
et/ou **en ce que** l'unité de capteur UWB (100), en particulier l'émetteur-récepteur UWB (3), présente une unité de commutation (2) pour commander une première unité d'antenne UWB (1a) et une deuxième unité d'antenne UWB (1b) pour réaliser la communication (K) ou pour réaliser la détection (D),
l'unité de commutation (2) étant notamment réalisée sous la forme d'un commutateur électronique, de préférence un commutateur HF.

7. Système d'actionnement (S) selon l'une quelconque des revendications précédentes,
**caractérisé en ce que**
l'unité de capteur UWB (100), en particulier l'émetteur-récepteur UWB (3), est réalisée de telle sorte que la fréquence moyenne et/ou la largeur de bande de l'antenne UWB sont/seront réglables de manière variable lors de l'exécution de la détection (D),
et/ou **en ce que** l'unité de capteur UWB (100), en particulier l'émetteur-récepteur UWB (3), est réalisée de telle sorte que des mesures effectuées par l'antenne UWB (1) lors de l'exécution de la détection (D) peuvent être calibrées à l'aide de mesures effectuées par l'antenne UWB (1), en particulier de temps de propagation des impulsions UWB, lors de l'exécution de la communication (K),
et/ou **en ce que** l'unité de capteur UWB (100), en particulier l'émetteur-récepteur UWB (3), est réalisée de telle sorte qu'un angle d'incidence de l'antenne UWB (1) peut être réglé de manière variable.

8. Système d'actionnement (S) selon l'une quelconque des revendications précédentes,
**caractérisé en ce que**
l'unité de capteur UWB (100), en particulier l'émetteur-récepteur UWB (3), est conçue pour effectuer la détection (D) de :
- une présence d'un utilisateur (B) et/ou d'un objet,
- une distance par rapport à un utilisateur (B) et/ou un objet,
- une position d'un utilisateur (B) et/ou d'un objet,
- une approche d'un utilisateur (B) et/ou d'un objet,
- un mouvement déterminé par une main (B2) ou un pied (B1) de l'utilisateur (B),
et/ou **en ce que** l'unité de capteur UWB (100), en particulier l'émetteur-récepteur UWB (3), est conçue pour servir d'unité de capteur, de préférence par une évaluation d'un temps de propagation d'impulsions UWB,
en particulier comme l'une des unités de capteur suivantes :
- capteur de proximité,
- capteur de mouvement, et/ou
- capteur de reconnaissance des modèles de mouvement.

9. Système d'actionnement (S) selon l'une quelconque des revendications précédentes,
**caractérisé en ce que**
l'unité de capteur UWB (100), en particulier l'émetteur-récepteur UWB (3), est conçue pour effectuer une communication (K), en particulier à l'aide d'une transmission radio numérique, de préférence à l'aide d'une modulation de phase d'impulsion,
pour interroger, recevoir et/ou vérifier une information, en particulier une information d'authentification (ID) d'un utilisateur, à partir du dispositif mobile (300) côté utilisateur,
et/ou **en ce que** l'unité de capteur UWB (100), en particulier l'émetteur-récepteur UWB (3), est conçue pour transmettre les résultats de la détection (D) et/ou de la communication (K) au dispositif mobile (300) côté utilisateur,
et/ou **en ce que** l'unité de capteur UWB (100), en particulier le dispositif de traitement (4) et/ou l'interface (5), est réalisée pour transmettre une information, en particulier une information d'authentification (ID) d'un utilisateur et/ou un code de fonction (F), calculé de préférence par le dispositif de traitement (4), pour actionner la partie mobile (202) à l'appareil de commande (201) du véhicule ou directement à un système de fermeture de la partie mobile (202),
et/ou **en ce que** l'unité de capteur UWB (100), en particulier le dispositif de traitement (4) et/ou l'interface (5), est conçue pour raccorder fonctionnellement l'unité de capteur UWB (100) à un système de sécurité, en particulier un système d'accès, du véhicule (200).

10. Système d'actionnement (S) selon l'une quelconque des revendications précédentes,
**caractérisé en ce que**
l'unité de capteur UWB (100), en particulier l'interface (5), présente un connecteur pour raccorder l'unité de capteur UWB (100) mécaniquement, en termes de technique de commande et/ou de technique de données à l'appareil de commande (201) du véhicule,
dans lequel, en particulier, le connecteur est adapté pour fixer l'unité de capteur UWB (100) au véhicule (200) sous la forme d'une unité pouvant être manipulée individuellement,
et/ou **en ce que** l'unité de capteur UWB (100), en particulier le connecteur, présente au moins un élément d'encliquetage (101) pour fixer l'unité de capteur UWB (100) par complémentarité de forme et/ou de force sur le véhicule (200),
et/ou **en ce que** l'unité de capteur UWB (100), en particulier le connecteur, présente au moins un élément de guidage (102) pour guider l'unité de capteur UWB (100) dans une direction prédéfinie lors de la fixation sur le véhicule (200).

11. Système d'actionnement (S) selon l'une quelconque des revendications précédentes,
**caractérisé en ce qu'**
un élément de boîtier (20) est prévu pour entourer au moins partiellement ou entièrement l'unité de capteur UWB (100) et/ou pour l'étanchéifier,
dans lequel en particulier l'élément de boîtier (20) est réalisé sous la forme d'une coque de boîtier qui est fixée de préférence après la fixation de l'unité de capteur UWB (100) sur le véhicule (20) au-dessus de l'unité de capteur UWB (100) afin de recouvrir et/ou de rendre étanche l'unité de capteur UWB (100),
ou dans lequel l'élément de boîtier (20) présente une première coque de boîtier (21) et une deuxième coque de boîtier (22) afin d'entourer entièrement et/ou de rendre étanche l'unité de capteur UWB (100),
et/ou **en ce que** l'élément de boîtier (20) présente au moins un élément d'encliquetage (23) pour fixer l'élément de boîtier (20) par complémentarité de forme et/ou de force sur ou dans le véhicule (200) ou sur l'unité de capteur UWB (100),
et/ou **en ce que** l'élément de boîtier (20) présente au moins un élément de guidage (24) pour guider l'élément de boîtier (20) dans une direction prédéfinie lors de la fixation sur ou dans le véhicule (200) ou sur l'unité de capteur UWB (100).

12. Véhicule (200) comprenant au moins un système d'actionnement (S) selon l'une quelconque des revendications précédentes pour au moins une partie mobile (202) du véhicule (200).

13. Véhicule (200) selon la revendication précédente,
**caractérisé en ce qu'**
une ou plusieurs unités de capteur UWB (100) est/sont prévue(s) pour une, pour plusieurs ou pour chaque partie mobile (202) du véhicule (200),
et/ou **en ce qu'**une ou plusieurs unités de capteur UWB (100) est/sont disposée(s), en particulier côté intérieur, sur une zone arrière, sur un pare-chocs, sur un diffuseur, sur un élément de structure, sur un montant A, B, et/ou C et/ou sur la partie mobile (102).

14. Procédé d'actionnement d'une partie mobile (202), notamment d'une porte ou d'un volet, d'un véhicule (200), à l'aide d'un système d'actionnement (S), notamment selon l'une des revendications précédentes, comprenant au moins une unité de capteur UWB (100),
dans lequel l'unité de capteur UWB (100) fonctionne dans un premier mode (I) comme une unité de capteur pour effectuer une détection (D) d'un modèle de mouvement (M) d'un utilisateur (B), en particulier d'une partie du corps (B1, B2), de préférence un pied (B1) ou une main (B2), de l'utilisateur (B),
et dans lequel l'unité de capteur UWB (100) fonctionne dans un deuxième mode (II) en tant qu'unité de communication pour effectuer une communication (K) avec un dispositif mobile côté utilisateur (300),
pour transmettre au moins un résultat de la détection (D) et/ou de la communication (K) à l'appareil de commande (201) du véhicule et pour actionner la partie mobile (202) en fonction du résultat.

15. Procédé selon la revendication précédente,
**caractérisé en ce que**
l'unité de capteur UWB (100) est exploitée simultanément dans le premier mode (I) et dans le deuxième mode (II),
ou **en ce que** l'unité de capteur UWB (100) fonctionne alternativement dans le premier mode (I) ou dans le deuxième mode (II),
et/ou **en ce que** l'unité de capteur UWB (100) est actionnée dans le premier mode (I) ou dans le deuxième mode (II) en fonction d'une vitesse et/ou d'un état du véhicule (200).
